(19) **Europäisches Patentamt European Patent Office Office européen des brevets**

(11) **EP 3 472 884 B1**

(12) **EUROPEAN PATENT SPECIFICATION**

(45) Date of publication and mention of the grant of the patent:
**06.03.2024 Bulletin 2024/10**

(21) Application number: **16905013.5**

(22) Date of filing: **15.06.2016**

(51) International Patent Classification (IPC):
*H01M 4/04* (2006.01)  *H01M 4/62* (2006.01)
*H01M 4/134* (2010.01)  *H01M 4/1395* (2010.01)
*H01M 10/0525* (2010.01)  *H01M 10/0569* (2010.01)
*H01M 10/44* (2006.01)

(52) Cooperative Patent Classification (CPC):
**H01M 4/621; H01M 4/0445; H01M 4/0461; H01M 4/134; H01M 4/1395; H01M 4/625; H01M 10/0525; H01M 10/0569; H01M 10/446; Y02E 60/10; Y02P 70/50**

(86) International application number:
**PCT/CN2016/085895**

(87) International publication number:
**WO 2017/214896 (21.12.2017 Gazette 2017/51)**

(54) **ANODE COMPOSITION, METHOD FOR PREPARING ANODE AND LITHIUM ION BATTERY**

ANODENZUSAMMENSETZUNG, VERFAHREN ZUR HERSTELLUNG EINER ANODE UND LITHIUM-IONEN-BATTERIE

COMPOSITION D'ANODE, PROCÉDÉ DE PRÉPARATION D'ANODE ET ACCUMULATEUR LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2019 Bulletin 2019/17**

(73) Proprietor: **Robert Bosch GmbH 70442 Stuttgart (DE)**

(72) Inventors:
• **YANG, Jun**
  **Shanghai 200335 (CN)**
• **BIE, Yitian**
  **Shanghai 200335 (CN)**
• **ZHANG, Jingjun**
  **Shanghai 200335 (CN)**
• **DOU, Yuqian**
  **Shanghai 200335 (CN)**

(56) References cited:
EP-A1- 2 677 578          EP-A1- 2 755 256
EP-A1- 2 858 146          EP-A1- 2 860 802
WO-A1-2015/018706     JP-A- H09 293 537
JP-A- 2000 348 730        US-A1- 2007 287 064
US-A1- 2008 166 633       US-A1- 2015 270 540

• **MARTIN K. DUFFICY ET AL: "Galactomannan binding agents for silicon anodes in Li-ion batteries", JOURNAL OF MATERIALS CHEMISTRY A, vol. 3, no. 22, 6 May 2015 (2015-05-06), pages 12023-12030, XP055655732, GB ISSN: 2050-7488, DOI: 10.1039/C5TA03126E**

**Description**

**TECHNICAL FIELD**

The present invention relates to an anode composition for lithium ion batteries, a process for preparing an anode for lithium ion batteries, a lithium ion battery, and a method for producing a lithium-ion battery.

**BACKGROUND**

Lithium ion batteries have now been widely used in energy storage systems and electric vehicles.

Silicon is a promising active material for electrodes of lithium ion batteries owning to its large theoretical capacity and moderate operating voltage. However, during the lithiation/delithiation processes, silicon undergoes dramatic expansion and contraction. Such huge volumetric change impairs the electrochemical performances of lithium ion batteries.

There is an on-going demand for more attractive and reliable lithium ion batteries.

On the other hand, in the effort to design a high-power battery, the reduction of active material particle size to nano-scale can help shorten the diffusion length of charge carriers, enhance the Li-ion diffusion coefficient, and therefore achieve faster reaction kinetics. However, nano-sized active materials have a large surface area, which results in a high irreversible capacity loss due to the formation of a solid electrode interface (SEI). For silicon oxide based anode, the irreversible reaction during the first lithiation also leads to a large irreversible capacity loss in initial cycle. This irreversible capacity loss consumes Li in the cathode, which decreases the capacity of the full cell.

Even worse, for Si-based anode, repeated volume change during cycling reveals more and more fresh surface on the anode, which leads to continuous growth of SEI. And the continuous growth of SEI continuously consumes Li in the cathode, which results in capacity decay for the full cell.

In order to provide more lithium ions to compensate for an SEI or other lithium consumption during the formation, additional or supplementary Li may be provided by the prelithiation of the anode. If the prelithiation of the anode is conducted, the irreversible capacity loss could be compensated in advance instead of Li consumption from the cathode. This results in higher efficiency and capacity of the cell.

However, a pre-lithiation degree of exact compensation for the irreversible loss of lithium from the anode doesn't help to solve the problem of Li consumption from the cathode during cycling. Therefore, in this case, the cycling performance will not be improved. To compensate for the loss of lithium from the cathode during cycling, an over-prelithiation is conducted in the present invention.

Martin K. et al. (Journal of Materials Chemistry A, Vol. 3, No. 22, pp. 12023-12030 (2015)) discloses galactomannan binding agents for silicon anodes in Li-ion batteries. JP H09 293537 A discloses a battery having a wound electrode group formed by spirally winding a belt-shaped positive electrode and a belt-shaped negative electrode through a separator.

US 2008/0166633 A1 discloses an anode comprising an anode active material; and a binder comprising a waterborne acrylic polymer and a water-soluble polymer, and a lithium battery employing the same.

US 2015/0270540 A1 discloses a negative electrode material comprising a silicon oxide, a negative electrode and a lithium ion secondary battery.

**SUMMARY OF THE INVENTION**

The scope of the present invention is defined in claims.

After intensive study, the inventors have now developed a novel anode composition for lithium ion batteries, comprising:

> a) a silicon-based active material; and
> b) a binder, wherein the binder is oxystarch.

Optionally, the anode composition according to the present disclosure may further comprise: c) a carbon material, wherein the carbon material may be selected from the group consisting of carbon black, acetylene black, Ketjen black, graphite, graphene, carbon nanotubes, vapour grown carbon fibers and any combination thereof.

The anode composition according to the present invention comprises:

> a) from 5% to 90% by weight of the silicon-based active material;
> b) from 5% to 35% by weight of the binder; and
> c) from 0 to 85% by weight of carbon material,

wherein the weight percents of each component are based on the total weight of the anode composition.

Also provided is a process for preparing an anode for lithium ion batteries, comprising:

preparing a slurry by mixing all components of the anode composition according to the present invention with a solvent; and
applying the slurry onto a current collector.

Also provided is a lithium ion battery, comprising an anode prepared from the anode composition according to the present invention, or an anode prepared by the process according to the present invention.

Surprisingly, the inventors found that by employing the anode compositions according to the present invention, the lithium ion batteries exhibit excellent electrochemical properties, including cycling performances and rate performances.

In addition, the binders employed in the present disclosure may be readily available from abundant natural sources, making it possible to economically prepare anode compositions at large scale. Furthermore, the whole process for preparing the anode compositions of the present invention is easy to be carried out, non-toxic and environmentally-friendly.

These and other features, aspects and advantages of the present disclosure will become evident to those skilled in the art from the following description of various examples taken in conjunction with the accompanying drawings.

## BRIEF DESCRIPTION OF THE DRAWINGS

Figure 1 compares cycling performances of cells prepared according to some Examples of the present disclosure and a Comparative Example.

Figure 2 compares rate performances of cells prepared according to some Examples of the present disclosure and some Comparative Examples.

Figure 3 compares cycling performances of cells prepared according to an Example of the present disclosure and some Comparative Examples.

Figure 4 compares cycling performances of cells prepared according to an Example of the present disclosure and some Comparative Examples.

Figure 5 shows TEM images of anodes prepared according to an Example of the present disclosure and some Comparative Examples, wherein the anodes have undergone some cycles under high loading.

Figure 6 shows the cycling performances of the full cells of Example P1-E1.

Figure 7 shows the normalized energy densities of the full cells of Example P1-E1.

Figure 8 shows the cycling performances of the full cells of Example P1-E2.

Figure 9 shows the normalized energy densities of the full cells of Example P1-E2.

Figure 10 shows the cycling performances of the full cells of Example P1-E3 with the prelithiation degrees $\varepsilon$ of a) 0 and b) 22%.

Figure 11 shows the discharge/charge curve of the cell of Comparative Example P2-CE1, wherein "1", "4", "50" and "100" stand for the $1^{st}$, $4^{th}$, $50^{th}$ and $100^{th}$ cycle respectively.

Figure 12 shows the discharge/charge curve of the cell of Example P2-E1, wherein "1", "4", "50" and "100" stand for the $1^{st}$, $4^{th}$, $50^{th}$ and $100^{th}$ cycle respectively.

Figure 13 shows the cycling performances of the cells of a) Comparative Example P2-CE1 (dashed line) and b) Example P2-E1 (solid line).

Figure 14 shows the average charge voltage a) and the average discharge voltage b) of the cell of Comparative Example P2-CE1.

Figure 15 shows the average charge voltage a) and the average discharge voltage b) of the cell of Example P2-E1.

Reference will now be made to some illustrative examples, and specific language will be used herein to describe the same. It will nevertheless be understood that no limitation of the scope of the disclosure is thereby intended.

## DETAILED DESCRIPTION OF THE INVENTION

Throughout this disclosure, all the scientific and technical terms, unless otherwise indicated, shall have the same meanings as those known to a person skilled in the art. Where there is inconsistency, the definition provided in the present disclosure should be taken.

It should be understood that the detailed description of all materials, processes, examples and drawings are presented for the purposes of illustration, and therefore, unless expressly specified otherwise, are not construed as limitations of the present disclosure.

Herein, the terms "cell" and "battery" may be interchangeably used. The terms "lithium ion cell" or "lithium ion battery" may also be abbreviated to "cell" or "battery".

Herein, the term "comprising" means that other ingredients or other steps which do not affect the final effect can be included. This term encompasses the terms "consisting of' and "consisting essentially of". The product and process according to the present disclosure can comprise, consist of, and consist essentially of the essential technical features and/or limitations of the present disclosure described herein, as well as any additional and/or optional ingredients, components, steps, or limitations described herein.

The use of the terms "a", "an" and "the" and similar referents in the context describing the subject matter of this application (especially in the context of the following claims) are to be construed to cover both the singular and the plural, unless otherwise indicated herein or clearly contradicted by context.

Unless otherwise specified, every numerical range in this context intends to include both endpoints and any numbers and sub-ranges falling within said numerical ranges.

Unless specially indicated, all materials and agents used in the present disclosure are commercially available.

Examples of the present disclosure are described in detail as follows.

### Component a): silicon-based active material

According to the present disclosure, the anode composition for lithium ion batteries comprises a silicon-based active material. Comparing with a carbon-based active material, a silicon-based active material possesses a larger theoretical capacity and a more moderate operating voltage.

The term "active material" as used herein means a material which is able to have lithium ions inserted therein and release lithium ion therefrom during repeated charging/discharging cycles.

The term "silicon-based active material" as used herein means an active material containing silicon. There is no specific limitation to the silicon-based active material, and those which are known for use in lithium ion batteries may be used. In some examples, the silicon-based active material may be selected from the group consisting of silicon, silicon alloys, silicon oxides, silicon/carbon composites, silicon oxide/carbon composites and any combination thereof. In some examples, the silicon alloy may comprise silicon and one or more metals selected from the group consisting of Ti, Sn, Al, Sb, Bi, As, Ge and Pb. In some examples, the silicon oxide may be a mixture of more than one oxides of silicon. For example, the silicon oxide may be represented as $SiO_x$, where the average value of x may be from about 0.5 to about 2.

In some examples, the silicon-based active material may be in the form of powders, or may be ground into powders. There is no specific limitation to the particle size of silicon-based active material, and those particle sizes commonly known for silicon-based active material may be used. In some examples, the particle size of silicon-based active material may be nanometer-scale (i.e., ranging from equal to or more than 1 nanometer to less than 1 micrometer) or micrometer-scale (i.e., ranging from equal to or larger than 1 micrometer to less than 1 millimeter). In some examples, the silicon oxide may have a particle size from 50nm to $15\mu m$, such as from 50nm to $3\mu m$.

According to the present invention, the content of the silicon-based active material is from 5% to 90% by weight, based on the total weight of the anode composition.

### Component b): binder

According to the present invention, the anode composition comprises oxystarch as a binder, wherein the binder may be further selected from the group consisting of locust bean gum, tara gum, karaya gum and any combination thereof.

Oxystarch, locust bean gum, tara gum and karaya gum are polysaccharides having dendritic structures. It is noted that not all dendritic polysaccharides derived from natural sources are suitable in the present invention. The inventors surprisingly found that the specific binder that is employed in the present invention, i.e., oxystarch, showed advantageous effects, such as superior adhesive forces, and excellent dispersibilities for carbon materials (if any), and helped to retain good stabilities and integrities of the anodes during volume changes, and thus improved the electrochemical properties of the final cells, including cycling performances and rate performances.

The binders employed in the present disclosure may be prepared from natural sources, and may also be commercially available.

The term "oxystarch" intends to mean a material prepared by partially oxidizing corn starch so that part of the hydroxyl groups in the corn starch are converted into carboxyl groups. The corn starch may be a natural mixture of amylose and amylopectin.

Since silicon has a high affinity for oxygen, an oxide layer will spontaneously form on the surface of silicon upon exposure to air even at room temperature. Therefore, there is usually a natural silicon oxide layer on the surface of the silicon-based active material. The surface layer of silicon oxide contains hydroxyl groups, i.e., silanol groups -Si-OH. The specific dendritic polysaccharide of the present invention simultaneously contains several carboxyl groups and hydroxyl groups in its molecule, and thus may form large amounts of hydrogen bonds between the dendritic polysaccharides and the silicon-based active materials, so as to hold the silicon-based active materials together during volume changes.

In addition, the specific dendritic polysaccharides according to the present invention may also possess excellent dispersibilities for carbon materials (if present). Carbon materials generally are hydrophobic. Therefore, for carbon materials that have relatively small particle sizes and large specific areas, it is usually difficult for them to disperse uniformly in binders containing hydroxyl groups and/or carboxyl groups.

However, the specific dendritic binders according to the present invention surprisingly have excellent dispersibilities for carbon materials, e.g., carbon black (such as super P), and thus help to reach homogenous dispersion of conductive carbon materials in electrodes.

Therefore, the specific dendritic polysaccharides of the present invention are particularly suitable for anodes containing both silicon-based active materials and carbon materials, or particularly suitable for anodes containing silicon/carbon composites and/or silicon oxide/carbon composites in the silicon-based active materials.

Meanwhile, the dendritic structures of the specific polysaccharides of the present invention may help to form three-dimensional networks, and contribute to the integrity and stability of the anodes. Therefore, by employing the specific dendritic polysaccharides of the present invention, the lithium ion batteries exhibit excellent electrochemical properties, including cycling performances and rate performances.

According to the present invention, the content of the oxystarch of the present disclosure is from 5% by weight to 35% by weight, for example, from 7% by weight to 20% by weight, based on the total weight of the anode composition. If the contents of the oxystarch fall within the aforementioned ranges, a good balance among electrical conductivity, adhesion property and capacity may be advantageously achieved.

## Component c): carbon material

According to the present invention, the anode composition may optionally comprise a carbon material. The carbon material may increase the electrical conductivity and/or dispersibility of the anode composition.

The term "carbon material" as used herein means a material containing carbon. There is no specific limitation to the carbon material, and those which are known for use in lithium ion batteries may be used. In some examples, the carbon material may be selected from the group consisting of carbon black, acetylene black, Ketjen black, graphite, graphene, carbon nanotubes, vapour grown carbon fibers and any combination thereof. In some examples, carbon black may be Super P (e.g., super P commercially available from Timcal, particle size: 20 nm). In some example, graphite may be graphite powder (e.g., particle size: 2-30 $\mu$m), and/or graphite flake (e.g., KS6L commercially available from Timcal, particle size: about 6 $\mu$m). The carbon materials may be used individually or in any combination. In some examples, Super P, graphite powder and graphite flake may be used in a combination of two or three of them. Super P has a relatively smaller particle size and good electrical conductivity, and may improve the one-dimensional electrical conductivity and one-dimensional dispersibility. Graphite powder and graphite flake have relatively larger particle sizes and good electrical conductivity, and may improve the two-dimensional electrical conductivity, two-dimensional dispersibility and cycling performance.

In some examples, the carbon material may be in the form of powders and/or flakes, or may be ground into powders and/or flakes.

According to the present invention, the content of the carbon material is from 0% by weight to 85% by weight, based on the total weight of the anode composition.

**Preparation process of an anode**

There is no specific limitation to the preparation process of the anode. The process for preparing an anode for lithium ion batteries comprises:

preparing a slurry by mixing all components of the anode composition according to the present invention with a solvent; and
applying the slurry onto a current collector.

There is no specific limitation to the solvent as used in this disclosure, and those solvents commonly known in cells may be used. In some examples, inorganic solvents (such as water), organic solvents (such as alcohol) or their combinations may be used as the solvent.
The whole process for preparing the anode composition of the present invention is easy to be carried out, non-toxic and environmentally-friendly.

**Lithium ion battery**

The lithium ion battery according to the present invention comprises an anode prepared from the anode composition according to the present invention, or comprises an anode prepared by the process according to the present invention.
The lithium ion batteries according to the present invention may be used in energy storage systems and electric vehicles.
In general, when the cathode efficiency is higher than the anode efficiency, a prelithiation can effectively increase the cell capacity via increasing the initial Coulombic efficiency. In this case, maximum energy density can be reached. For a cell, in which the loss of lithium during cycling may occur, prelithiation can also improve the cycling performance when an over-prelithiation is applied. The over-prelithiation provides a reservoir of lithium in the whole electrochemical system and the extra lithium in the anode compensates the possible lithium consumption from the cathode during cycling.
In principle, the higher prelithiation degree, the better cycling performance could be achieved. However, a higher prelithiation degree involves a much larger anode. Therefore, the cell energy density will decrease due to the increased weight and volume of the anode. Therefore, the prelithiation degree should be carefully controlled to balance the cycling performance and the energy density.
The present invention, according to one aspect, relates to a lithium-ion battery comprising a cathode, an electrolyte, and an anode, wherein the anode is prepared from the anode composition according to the present disclosure, or prepared by the process according to the present disclosure, and the initial surface capacity a of the cathode and the initial surface capacity b of the anode satisfy the relation formulae

$$1 < (b \bullet (1 - \varepsilon) / a) \leq 1.2 \qquad (I),$$

$$0 < \varepsilon \leq ((a \bullet \eta_1) / 0.6 - (a - b \bullet (1 - \eta_2))) / b \qquad (II),$$

where

$\varepsilon$ is the prelithiation degree of the anode,
$\eta_1$ is the initial coulombic efficiency of the cathode, and
$\eta_2$ is the initial coulombic efficiency of the anode.

In the context of the present invention, the term "surface capacity" means the specific surface capacity in $mAh/cm^2$, the electrode capacity per unit of the electrode surface area. The term "initial capacity of the cathode" means the initial delithiation capacity of the cathode, and the term "initial capacity of the anode" means the initial lithiation capacity of the anode.
According to the present invention, the term "prelithiation degree" $\varepsilon$ of the anode can be calculated by (b - a • x) / b, wherein x is the balance of the anode capacity after prelithiation and the cathode capacity. For safety reasons, the anode capacity is usually designed slightly greater than the cathode capacity, and the balance of the anode capacity after prelithiation and the cathode capacity can be selected from greater than 1 to 1.2, preferably from 1.05 to 1.15, more preferably from 1.08 to 1.12, particular preferably about 1.1.
In accordance with an embodiment of the lithium-ion battery according to the present invention, the initial surface capacity a of the cathode and the initial surface capacity b of the anode satisfy the relation formulae

$$1.05 \leq (b \bullet (1 - \varepsilon) / a) \leq 1.15 \qquad (Ia),$$

preferably

$$1.08 \leq (b \bullet (1 - \varepsilon) / a) \leq 1.12 \qquad (Ib).$$

In accordance with another embodiment of the lithium-ion battery according to the present invention, the prelithiation degree of the anode can be defined as

$$\varepsilon = ((a \bullet \eta_1) / c - (a - b \bullet (1 - \eta_2))) / b \qquad (III),$$

$$0.6 \leq c < 1 \qquad (IV),$$

preferably

$$0.7 \leq c < 1 \qquad (IVa),$$

more preferably

$$0.7 \leq c \leq 0.9 \qquad (IVb),$$

particular preferably

$$0.75 \leq c \leq 0.85 \qquad (IVc),$$

where
c is the depth of discharge (DoD) of the anode.

In particular, $\varepsilon = (b \bullet (1 - \eta_2) - a \bullet (1 - \eta_1)) / b$, when c = 1.
In accordance with another embodiment of the lithium-ion battery according to the present invention, the active material of the anode can be selected from the group consisting of carbon, silicon, silicon intermetallic compound, silicon oxide, silicon alloy and mixtures thereof.
In accordance with another embodiment of the lithium-ion battery according to the present invention, the active material of the cathode can be selected from the group consisting of lithium nickel oxide, lithium cobalt oxide, lithium manganese oxide, lithium nickel cobalt oxide, lithium nickel cobalt manganese oxide, and mixtures thereof.
The present invention, according to another aspect, relates to a method for producing a lithium-ion battery comprising a cathode, an electrolyte, and an anode, wherein the anode is prepared from the anode composition according to the present disclosure, or prepared by the process according to the present disclosure, and said method includes the following steps:

1) prelithiating the active material of the anode or the anode to a prelithiation degree $\varepsilon$, and
2) assembling the anode and the cathode to obtain said lithium-ion battery, characterized in that the initial surface capacity a of the cathode, the initial surface capacity b of the anode, and the prelithiation degree $\varepsilon$ satisfy the relation formulae

$$1 < (b \bullet (1 - \varepsilon) / a) \leq 1.2 \qquad (I),$$

$$0 < \varepsilon \leq ((a \cdot \eta_1) / 0.6 - (a - b \cdot (1 - \eta_2))) / b \qquad \text{(II)},$$

where

$\varepsilon$ is the prelithiation degree of the anode,
$\eta_1$ is the initial coulombic efficiency of the cathode, and
$\eta_2$ is the initial coulombic efficiency of the anode.

In the context of the present invention, the term "surface capacity" means the specific surface capacity in $mAh/cm^2$, the electrode capacity per unit of the electrode surface area. The term "initial capacity of the cathode" means the initial delithiation capacity of the cathode, and the term "initial capacity of the anode" means the initial lithiation capacity of the anode.

According to the present invention, the term "prelithiation degree" $\varepsilon$ of the anode can be calculated by $(b - a \cdot x) / b$, wherein $x$ is the balance of the anode capacity after prelithiation and the cathode capacity. For safety reasons, the anode capacity is usually designed slightly greater than the cathode capacity, and the balance of the anode capacity after prelithiation and the cathode capacity can be selected from greater than 1 to 1.2, preferably from 1.05 to 1.15, more preferably from 1.08 to 1.12, particular preferably about 1.1.

The prelithiation process is not particularly limited. The lithiation of the anode active material substrate can be carried out for example in several different ways. A physical process includes deposition of a lithium coating layer on the surface of the anode active material substrate such as silicon particles, thermally induced diffusion of lithium into the substrate such as silicon particles, or spray of stabilized Li powder onto the anode tape. An electrochemical process includes using silicon particles and a lithium metal plate as the electrodes, and applying an electrochemical potential so as to intercalate $Li^+$ ions into the bulk of the silicon particles. An alternative electrochemical process includes assembling a half cell with silicon particles and Li metal foil electrodes, charging the half cell, and disassembling the half cell to obtain lithiated silicon particles.

In accordance with an embodiment of the method according to the present invention, the initial surface capacity a of the cathode and the initial surface capacity b of the anode satisfy the relation formulae

$$1.05 \leq (b \cdot (1 - \varepsilon) / a) \leq 1.15 \qquad \text{(Ia)},$$

preferably

$$1.08 \leq (b \cdot (1 - \varepsilon) / a) \leq 1.12 \qquad \text{(Ib)}.$$

In accordance with another embodiment of the method according to the present invention, the prelithiation degree of the anode can be defined as

$$\varepsilon = ((a \cdot \eta_1) / c - (a - b \cdot (1 - \eta_2))) / b \qquad \text{(III)},$$

$$0.6 \leq c < 1 \qquad \text{(IV)},$$

preferably

$$0.7 \leq c < 1 \qquad \text{(IVa)},$$

more preferably

$$0.7 \leq c \leq 0.9 \qquad \text{(IVb)},$$

particular preferably

$$0.75 \leq c \leq 0.85 \qquad\qquad (\text{IVc}),$$

where
c is the depth of discharge (DoD) of the anode.

In particular, $\varepsilon = (b \cdot (1 - \eta_2) - a \cdot (1 - \eta_1)) / b$, when c = 1.

In accordance with another embodiment of the method according to the present invention, the active material of the anode can be selected from the group consisting of carbon, silicon, silicon intermetallic compound, silicon oxide, silicon alloy and mixtures thereof.

In accordance with another embodiment of the method according to the present invention, the active material of the cathode can be selected from the group consisting of lithium nickel oxide, lithium cobalt oxide, lithium manganese oxide, lithium nickel cobalt oxide, lithium nickel cobalt manganese oxide, and mixtures thereof.

Prior art prelithiation methods often involve a treatment of coated anode tape. This could be an electrochemical process, or physical contact of the anode with stabilized lithium metal powder. However, these prelithiation procedure requires additional steps to the current battery production method. Furthermore, due to the highly active nature of the prelithiated anode, the subsequent battery production procedure requires an environment with well-controlled humidity, which results in an increased cost for the cell production.

The present invention provides an alternative method of in-situ prelithiation. The lithium source for prelithaition comes from the cathode. During the first formation cycle, by increasing the cut-off voltage of the full cell, additional amount of lithium is extracted from the cathode; by controlling the discharge capacity, the additional lithium extracted from the cathode is stored at the anode, and this is ensured in the following cycles by maintaining the upper cut-off voltage the same as in the first cycle.

The present invention, according to another aspect, relates to a lithium-ion battery comprising a cathode, an electrolyte, and an anode, characterized in that the anode is prepared from the anode composition according to the present disclosure, or prepared by the process according to the present disclosure, and said lithium-ion battery is subjected to a formation process, wherein said formation process includes an initial formation cycle comprising the following steps:

a) charging the battery to a cut off voltage $V_{off}$ which is greater than the nominal charge cut off voltage of the battery, and
b) discharging the battery to the nominal discharge cut off voltage of the battery.

In the context of the present invention, the term "formation process" means the initial one or more charging/discharging cycles of the lithium-ion battery for example at 0.1C, once the lithium-ion battery is assembled. During this process, a stable solid-electrolyte-inter-phase (SEI) layer can be formed at the anode.

In accordance with an embodiment of the formation process according to the present invention, in step a) the battery can be charged to a cut off voltage which is up to 0.8 V greater than the nominal charge cut off voltage of the battery, preferably 0.1 ~ 0.5 V greater than the nominal charge cut off voltage of the battery, more preferably 0.2 - 0.4 V greater than the nominal charge cut off voltage of the battery, particular preferably about 0.3 V greater than the nominal charge cut off voltage of the battery.

A lithium-ion battery with the typical cathode materials of cobalt, nickel, manganese and aluminum typically charges to 4.20V $\pm$ 50mV as the nominal charge cut off voltage. Some nickel-based batteries charge to 4.10V $\pm$ 50mV.

In accordance with another embodiment of the formation process according to the present invention, the nominal charge cut off voltage of the battery can be about 4.2 V $\pm$ 50mV, and the nominal discharge cut off voltage of the battery can be about 2.5 V $\pm$ 50mV.

In accordance with another embodiment of the formation process according to the present invention, the Coulombic efficiency of the cathode in the initial formation cycle can be 40% - 80%, preferably 50% - 70%.

In accordance with another embodiment of the formation process according to the present invention, said formation process further includes one or two or more formation cycles, which are carried out in the same way as the initial formation cycle.

For the traditional lithium-ion batteries, when the battery is charged to a cut off voltage greater than the nominal charge cut off voltage, metallic lithium will be plated on the anode, the cathode material becomes an oxidizing agent, produces carbon dioxide ($CO_2$), and increases the battery pressure.

In case of a preferred lithium-ion battery defined below according to the present invention, when the battery is charged to a cut off voltage greater than the nominal charge cut off voltage, additional $Li^+$ ions can be intercalated into the anode having additional capacity, instead of being plated on the anode.

In case of another preferred lithium-ion battery defined below according to the present invention, in which the electrolyte comprises one or more fluorinated carbonate compounds as a nonaqueous organic solvent, the electrochemical window of the electrolyte can be broadened, and the safety of the battery can still be ensured at a charge cut off voltage of 5V or even higher.

In order to implement the present invention, an additional cathode capacity can preferably be supplemented to the nominal initial surface capacity of the cathode.

In the context of the present invention, the term "nominal initial surface capacity" a of the cathode means the nominally designed initial surface capacity of the cathode.

In the context of the present invention, the term "surface capacity" means the specific surface capacity in $mAh/cm^2$, the electrode capacity per unit of the electrode surface area. The term "initial capacity of the cathode" means the initial delithiation capacity of the cathode, and the term "initial capacity of the anode" means the initial lithiation capacity of the anode.

In accordance with an embodiment of the lithium-ion battery according to the present invention, the relative increment r of the initial surface capacity of the cathode over the nominal initial surface capacity a of the cathode and the cut off voltage $V_{off}$ satisfy the following linear equation with a tolerance of $\pm 5\%$, $\pm 10\%$, or $\pm 20\%$

$$r = 0.75V_{off} - 3.134 \qquad (V).$$

In accordance with another embodiment of the lithium-ion battery according to the present invention, the relative increment r of the initial surface capacity of the cathode over the nominal initial surface capacity a of the cathode and the cut off voltage $V_{off}$ satisfy the following quadratic equation with a tolerance of $\pm 5\%$, $\pm 10\%$, or $\pm 20\%$

$$r = -0.7857V_{off}^2 + 7.6643V_{off} - 18.33 \qquad (Va).$$

In accordance with another embodiment of the lithium-ion battery according to the present invention, the nominal initial surface capacity a of the cathode and the initial surface capacity b of the anode satisfy the relation formulae

$$1 < b \bullet \eta_2 / (a \bullet (1 + r) - b \bullet (1 - \eta_2)) - \varepsilon \leq 1.2 \qquad (I'),$$

preferably

$$1.05 \leq b \bullet \eta_2 / (a \bullet (1 + r) - b \bullet (1 - \eta_2)) - \varepsilon \leq 1.15 \qquad (Ia'),$$

more preferably

$$1.08 \leq b \bullet \eta_2 / (a \bullet (1 + r) - b \bullet (1 - \eta_2)) - \varepsilon \leq 1.12 \qquad (Ib'),$$

$$0 < \varepsilon \leq ((a \bullet \eta_1) / 0.6 - (a - b \bullet (1 - \eta_2))) / b \qquad (II),$$

where
$\varepsilon$ is the prelithiation degree of the anode, and
$\eta_2$ is the initial coulombic efficiency of the anode.

According to the present invention, the term "prelithiation degree" $\varepsilon$ of the anode can be calculated by (b - a $\bullet$ x) / b, wherein x is the balance of the anode capacity after prelithiation and the cathode capacity. For safety reasons, the anode capacity is usually designed slightly greater than the cathode capacity, and the balance of the anode capacity after prelithiation and the cathode capacity can be selected from greater than 1 to 1.2, preferably from 1.05 to 1.15, more preferably from 1.08 to 1.12, particular preferably about 1.1.

In accordance with another embodiment of the lithium-ion battery according to the present invention, the prelithiation degree of the anode can be defined as

$$\varepsilon = ((a \bullet \eta_1) / c - (a - b \bullet (1 - \eta_2))) / b \qquad (III),$$

$$0.6 \le c < 1 \qquad\qquad\qquad \text{(IV)},$$

preferably

$$0.7 \le c < 1 \qquad\qquad\qquad \text{(IVa)},$$

more preferably

$$0.7 \le c \le 0.9 \qquad\qquad\qquad \text{(IVb)},$$

particular preferably

$$0.75 \le c \le 0.85 \qquad\qquad\qquad \text{(IVc)},$$

where
$\eta_1$ is the initial coulombic efficiency of the cathode, and
c is the depth of discharge (DoD) of the anode.

In particular, $\varepsilon = (b \cdot (1 - \eta_2) - a \cdot (1 - \eta_1)) / b$, when c = 1.

In accordance with another embodiment of the lithium-ion battery according to the present invention, the electrolyte comprises one or more fluorinated carbonate compounds, preferably fluorinated cyclic or acyclic carbonate compounds, as a nonaqueous organic solvent.

In accordance with another embodiment of the lithium-ion battery according to the present invention, the fluorinated carbonate compounds can be selected from the group consisting of fluorinated ethylene carbonate, fluorinated propylene carbonate, fluorinated dimethyl carbonate, fluorinated methyl ethyl carbonate, and fluorinated diethyl carbonate, in which the "fluorinated" carbonate compounds can be understood as "monofluorinated", "difluorinated", "trifluorinated", "tetrafluorinated", and "perfluorinated" carbonate compounds.

In accordance with another embodiment of the lithium-ion battery according to the present invention, the fluorinated carbonate compounds can be selected from the group consisting of monofluoroethylene carbonate, 4,4-difluoro ethylene carbonate, 4,5-difluoro ethylene carbonate, 4,4,5-trifluoroethylene carbonate, 4,4,5,5-tetrafluoroethylene carbonate, 4-fluoro-4-methyl ethylene carbonate, 4,5-difluoro-4-methyl ethylene carbonate, 4-fluoro-5-methyl ethylene carbonate, 4,4-difluoro-5-methyl ethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoro ethylene carbonate, 4-(fluoromethyl)-5-fluoro ethylene carbonate, 4,4,5-trifluoro-5-methyl ethylene carbonate, 4-fluoro-4,5-dimethyl ethylene carbonate, 4,5-difluoro-4,5-dimethyl ethylene carbonate, and 4,4-difluoro-5,5-dimethyl ethylene carbonate.

In accordance with another embodiment of the lithium-ion battery according to the present invention, the content of the fluorinated carbonate compounds can be 10 ~ 100 vol. %, preferably 30 ~ 100 vol. %, more preferably 50 ~ 100 vol. %, particular preferably 80 - 100 vol. %, based on the total nonaqueous organic solvent.

In accordance with another embodiment of the lithium-ion battery according to the present invention, the active material of the anode can be selected from the group consisting of carbon, silicon, silicon intermetallic compound, silicon oxide, silicon alloy and mixtures thereof.

In accordance with another embodiment of the lithium-ion battery according to the present invention, the active material of the cathode can be selected from the group consisting of lithium nickel oxide, lithium cobalt oxide, lithium manganese oxide, lithium nickel cobalt oxide, lithium nickel cobalt manganese oxide, and mixtures thereof.

In accordance with another embodiment of the lithium-ion battery according to the present invention, after being subjected to the formation process, said lithium-ion battery can still be charged to a cut off voltage $V_{off}$, which is greater than the nominal charge cut off voltage of the battery, and be discharged to the nominal discharge cut off voltage of the battery.

In accordance with another embodiment of the lithium-ion battery according to the present invention, after being subjected to the formation process, said lithium-ion battery can still be charged to a cut off voltage $V_{off}$, which is up to 0.8 V greater than the nominal charge cut off voltage of the battery, more preferably 0.1 ~ 0.5 V greater than the nominal charge cut off voltage of the battery, particular preferably 0.2 - 0.4 V greater than the nominal charge cut off voltage of the battery, especially preferably about 0.3 V greater than the nominal charge cut off voltage of the battery, and be discharged to the nominal discharge cut off voltage of the battery.

The present invention, according to another aspect, relates to a method for producing a lithium-ion battery comprising a cathode, an electrolyte, and an anode, wherein the anode is prepared from the anode composition according to the present disclosure, or prepared by the process according to the present disclosure, and said method includes the following steps:

1) assembling the anode and the cathode to obtain said lithium-ion battery, and
2) subjecting said lithium-ion battery to a formation process, wherein said formation process includes an initial formation cycle comprising the following steps:

    a) charging the battery to a cut off voltage $V_{off}$ which is greater than the nominal charge cut off voltage of the battery, and
    b) discharging the battery to the nominal discharge cut off voltage of the battery.

In the context of the present invention, the term "formation process" means the initial one or more charging/discharging cycles of the lithium-ion battery for example at 0.1C, once the lithium-ion battery is assembled. During this process, a stable solid-electrolyte-inter-phase (SEI) layer can be formed at the anode.

In accordance with an embodiment of the formation process according to the present invention, in step a) the battery can be charged to a cut off voltage which is up to 0.8 V greater than the nominal charge cut off voltage of the battery, preferably 0.1 ~ 0.5 V greater than the nominal charge cut off voltage of the battery, more preferably 0.2 - 0.4 V greater than the nominal charge cut off voltage of the battery, particular preferably about 0.3 V greater than the nominal charge cut off voltage of the battery.

A lithium-ion battery with the typical cathode materials of cobalt, nickel, manganese and aluminum typically charges to 4.20V ± 50mV as the nominal charge cut off voltage. Some nickel-based batteries charge to 4.10V ± 50mV.

In accordance with another embodiment of the formation process according to the present invention, the nominal charge cut off voltage of the battery can be about 4.2 V ± 50mV, and the nominal discharge cut off voltage of the battery can be about 2.5 V ± 50mV.

In accordance with another embodiment of the formation process according to the present invention, the Coulombic efficiency of the cathode in the initial formation cycle can be 40% - 80%, preferably 50% - 70%.

In accordance with another embodiment of the formation process according to the present invention, said formation process further includes one or two or more formation cycles, which are carried out in the same way as the initial formation cycle.

In order to implement the present invention, an additional cathode capacity can preferably be supplemented to the nominal initial surface capacity of the cathode.

In the context of the present invention, the term "nominal initial surface capacity" a of the cathode means the nominally designed initial surface capacity of the cathode.

In the context of the present invention, the term "surface capacity" means the specific surface capacity in $mAh/cm^2$, the electrode capacity per unit of the electrode surface area. The term "initial capacity of the cathode" means the initial delithiation capacity of the cathode, and the term "initial capacity of the anode" means the initial lithiation capacity of the anode.

In accordance with an embodiment of the method according to the present invention, the relative increment r of the initial surface capacity of the cathode over the nominal initial surface capacity a of the cathode and the cut off voltage $V_{off}$ satisfy the following linear equation with a tolerance of ±5%, ±10%, or ±20%

$$r = 0.75 V_{off} - 3.134 \qquad (V).$$

In accordance with another embodiment of the method according to the present invention, the relative increment r of the initial surface capacity of the cathode over the nominal initial surface capacity a of the cathode and the cut off voltage $V_{off}$ satisfy the following quadratic equation with a tolerance of ±5%, ±10%, or ±20%

$$r = -0.7857 V_{off}^2 + 7.6643 V_{off} - 18.33 \qquad (Va).$$

In accordance with another embodiment of the method according to the present invention, the nominal initial surface capacity a of the cathode and the initial surface capacity b of the anode satisfy the relation formulae

$$1 < b \bullet \eta_2 / (a \bullet (1 + r) - b \bullet (1 - \eta_2)) - \varepsilon \leq 1.2 \qquad (I'),$$

preferably

$$1.05 \leq b \bullet \eta_2 / (a \bullet (1 + r) - b \bullet (1 - \eta_2)) - \varepsilon \leq 1.15 \qquad (Ia'),$$

more preferably

$$1.08 \leq b \bullet \eta_2 / (a \bullet (1 + r) - b \bullet (1 - \eta_2)) - \varepsilon \leq 1.12 \qquad (Ib'),$$

$$0 < \varepsilon \leq ((a \bullet \eta_1) / 0.6 - (a - b \bullet (1 - \eta_2))) / b \qquad (II),$$

where
$\varepsilon$ is the prelithiation degree of the anode, and
$\eta_2$ is the initial coulombic efficiency of the anode.

According to the present invention, the term "prelithiation degree" $\varepsilon$ of the anode can be calculated by $(b - a \bullet x) / b$, wherein x is the balance of the anode capacity after prelithiation and the cathode capacity. For safety reasons, the anode capacity is usually designed slightly greater than the cathode capacity, and the balance of the anode capacity after prelithiation and the cathode capacity can be selected from greater than 1 to 1.2, preferably from 1.05 to 1.15, more preferably from 1.08 to 1.12, particular preferably about 1.1.

In accordance with another embodiment of the method according to the present invention, the prelithiation degree of the anode can be defined as

$$\varepsilon = ((a \bullet \eta_1) / c - (a - b \bullet (1 - \eta_2))) / b \qquad (III),$$

$$0.6 \leq c < 1 \qquad (IV),$$

preferably

$$0.7 \leq c < 1 \qquad (IVa),$$

more preferably

$$0.7 \leq c \leq 0.9 \qquad (IVb),$$

particular preferably

$$0.75 \leq c \leq 0.85 \qquad (IVc),$$

where
$\eta_1$ is the initial coulombic efficiency of the cathode, and
c is the depth of discharge (DoD) of the anode.

In particular, $\varepsilon = (b \bullet (1 - \eta_2) - a \bullet (1 - \eta_1)) / b$, when c = 1.

In accordance with another embodiment of the method according to the present invention, the electrolyte comprises one or more fluorinated carbonate compounds, preferably fluorinated cyclic or acyclic carbonate compounds, as a nonaqueous organic solvent.

In accordance with another embodiment of the method according to the present invention, the fluorinated carbonate compounds can be selected from the group consisting of fluorinated ethylene carbonate, fluorinated propylene carbonate, fluorinated dimethyl carbonate, fluorinated methyl ethyl carbonate, and fluorinated diethyl carbonate, in which the "fluorinated" carbonate compounds can be understood as "monofluorinated", "difluorinated", "trifluorinated", "tetrafluorinated", and "perfluorinated" carbonate compounds.

In accordance with another embodiment of the method according to the present invention, the fluorinated carbonate compounds can be selected from the group consisting of monofluoroethylene carbonate, 4,4-difluoro ethylene carbonate, 4,5-difluoro ethylene carbonate, 4,4,5-trifluoroethylene carbonate, 4,4,5,5-tetrafluoroethylene carbonate, 4-fluoro-4-methyl ethylene carbonate, 4,5-difluoro-4-methyl ethylene carbonate, 4-fluoro-5-methyl ethylene carbonate, 4,4-difluoro-5-methyl ethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoro ethylene carbonate, 4-(fluoromethyl)-5-fluoro ethylene carbonate, 4,4,5-trifluoro-5-methyl ethylene carbonate, 4-fluoro-4,5-dimethyl ethylene carbonate, 4,5-difluoro-4,5-dimethyl ethylene carbonate, and 4,4-difluoro-5,5-dimethyl ethylene carbonate.

In accordance with another embodiment of the method according to the present invention, the content of the fluorinated carbonate compounds can be 10 ~ 100 vol. %, preferably 30 ~ 100 vol. %, more preferably 50 ~ 100 vol. %, particular preferably 80 ~ 100 vol. %, based on the total nonaqueous organic solvent.

In accordance with another embodiment of the method according to the present invention, the active material of the anode can be selected from the group consisting of carbon, silicon, silicon intermetallic compound, silicon oxide, silicon alloy and mixtures thereof.

In accordance with another embodiment of the method according to the present invention, the active material of the cathode can be selected from the group consisting of lithium nickel oxide, lithium cobalt oxide, lithium manganese oxide, lithium nickel cobalt oxide, lithium nickel cobalt manganese oxide, and mixtures thereof.

## EXAMPLES

### MATERIALS

Nano silicon particles: silicon-based active material, 50-200nm, available from Alfa-Aesar.

Karaya gum: dendritic polysaccharide, binder, available from Aladdin.

Oxystarch: dendritic polysaccharide, binder, available from Dongguan Dongmei Starch Co., Ltd., China.

Locust bean gum: dendritic polysaccharide, binder, available from Aladdin.

Tara gum: dendritic polysaccharide, binder, available from Aladdin.

Sodium carboxymethyl cellulose (CMC): linear polysaccharide, binder, available from Aladdin.

Sodium alginate (SA): linear polysaccharide, binder, available from Aldrich.

Super P: carbon black, carbon material, about 20nm, available from Timcal.

KS6L: graphite flake, carbon material, about 6 $\mu$m, available from Timcal.

Graphite powder: carbon material, about 2-10 $\mu$m, available from SHENZHEN KEJING STAR TECHNOLOGY CO..

ET20-26: polyethylene (PE), separator, available from ENTEK.

**Comparative Example 1**

[Preparation of an anode]

600 mg nano silicon particles were mixed with 200 mg Super P (SP) and 200 mg karaya gum (KG) in water to obtain a slurry. Herein, the weight ratio of Si: SP: KG was 6: 2: 2. After stirring for 4h, the resultant slurry was coated onto a Cu foil, and then was dried at 70 °C in vacuum for 8 h. Finally, the coated Cu foil was cut into several Φ 12 mm anodes.

[Preparation of a cell]

A coin cell (CR2016) was assembled in an Argon-filled glovebox (MB-10 compact, MBraun) by using the anode obtained above. A Li metal foil was used as a counter electrode. 1M LiPF$_6$ in FEC/EC/DMC (1:5:5 by volume, a mixture of fluoroethylene carbonate (FEC), ethylene carbonate (EC) and dimethyl carbonate (DMC)) was used as an electrolyte. ET20-26 was employed as a separator.

## Example 2

Anodes and cells were prepared in the same way as described above for Comparative Example 1, except that 200 mg oxystarch (OS) was used instead of 200 mg karaya gum (KG).

## Comparative Example 3

Anodes and cells were prepared in the same way as described above for Comparative Example 1, except that 200 mg locust bean gum was used instead of 200 mg karaya gum (KG).

## Comparative Example 4

Anodes and cells were prepared in the same way as described above for Comparative Example 1, except that 200 mg tara gum was used instead of 200 mg karaya gum (KG).

## Comparative Example 5

Anodes and cells were prepared in the same way as described above for Comparative Example 1, except that 400 mg nano silicon particles, 250 mg nano graphite powder, 150 mg KS6L, 50 mg Super P (SP) and 150 mg karaya gum (KG) were mixed together in water to obtain a slurry.

## Comparative Example 6

Anodes and cells were prepared in the same way as described above for Comparative Example 1, except that 200 mg sodium carboxymethyl cellulose (CMC) was used instead of 200 mg karaya gum (KG).

## Comparative Example 7

Anodes and cells were prepared in the same way as described above for Comparative Example 1, except that 200 mg sodium alginate (SA) was used instead of 200 mg karaya gum (KG).

## Comparative Example 8

Anodes and cells were prepared in the same way as described above for Comparative Example 5, except that 150 mg sodium carboxymethyl cellulose (CMC) was used instead of 150 mg karaya gum (KG).

## Comparative Example 9

Anodes and cells were prepared in the same way as described above for Comparative Example 5, except that 150 mg sodium alginate (SA) was used instead of 150 mg karaya gum (KG).

## Comparative Example 10

40 mg Super P (SP) and 40 mg karaya gum (KG) were mixed with 2.6 ml water to obtain a slurry. Herein, the weight ratio of SP: KG was 1:1. After stirring for about 3 to 4 h, the resultant slurry was coated onto a Cu foil, and then was dried at 60 °C in vacuum for 3 to 4 h. The coated Cu foil was then observed with naked eyes.

## Comparative Example 11

A coated Cu foil was prepared in the same way as described above for Comparative Example 10, except that 40 mg sodium carboxymethyl cellulose (CMC) was used instead of 40 mg karaya gum (KG).

**Comparative Example 12**

A coated Cu foil was prepared in the same way as described above for Comparative Example 10, except that 40 mg sodium alginate (SA) was used instead of 40 mg karaya gum (KG).

**[Evaluation tests]**

**[Electrochemical effects of different binders]**

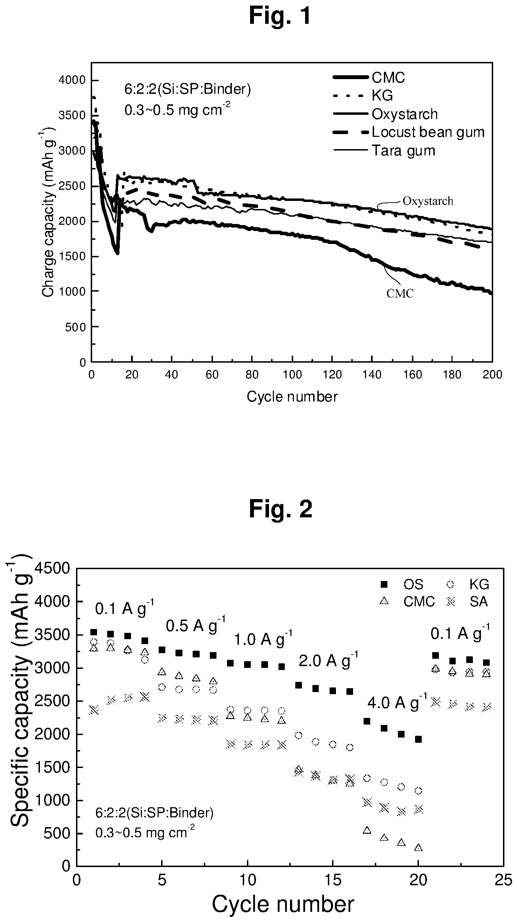

Figure 1 compares the cycling performances of the cells of Comparative Example 1 (containing KG), Example 2 (containing OS), Comparative Example 3 (containing locust bean) and Comparative Example 4 (containing tara gum) with Comparative Example 6 (containing CMC).

Specifically, the cycling performance of each cell was evaluated on a LAND battery test system (Wuhan Kingnuo Electronics Co., Ltd., China) at 25 °C. Each cell was discharged/charged within a voltage range of from 0.01 to 1.2V ($vs$ Li/Li$^+$) and at 0.1 A g$^{-1}$ for the 1st and 2nd cycles, at 0.3 A g$^{-1}$ for the 3rd and 4th cycles, and at a constant current density of 1.5 A g$^{-1}$ for the following cycles. The mass loading of the nano silicon particles in each anode of the cells is 0.3 to 0.5 mg/cm$^2$.

The 1st and 5th charge capacities as well as capacity retentions of these five cells are summarized in Table 1 below.

Table 1

| No. | Binder | 1st charge capacity-0.1 A g$^{-1}$ (mAb g$^{-1}$) | 5th charge capacity-1.5 A g$^{-1}$ (mAb g$^{-1}$) | Ratio of Capacity at 1.5 A g$^{-1}$/Capacity at 0.1 A g$^{-1}$ | Capacity retention after 150 cycles |
|---|---|---|---|---|---|
| Comparative Example 1 | KG | 3769 | 2865 | 76% | 73% |
| Example 2 | OS | 2962 | 2602 | 88% | 82% |
| Comparative Example 3 | Locust bean gum | 3414 | 2577 | 75% | 72% |
| Comparative Example 4 | Tara gum | 3186 | 2448 | 77% | 77% |
| Comparative Example 6 | CMC | 3390 | 2275 | 67% | 58% |

By referring to figure 1 and Table 1, it can be seen that Example 2 and Comparative Examples 1, 3 and 4, which employed dendritic polysaccharides and formed three-dimensional networks, showed higher capacities and better stabilities than Comparative Example 6, wherein Comparative Example 6 employed linear polysaccharide and formed linear networks. The elastic natures of chair-to-boat conformation in $\alpha$-linkages of KG and OS backbones may accommodate the volume changes of silicon during repeated charge/discharge cycles, and contribute to better cycling performances. Particularly, when increasing the current density from 0.1 A g$^{-1}$ (e.g. the 1st cycle) to 1.5 A g$^{-1}$ (e.g. the 5th cycle), Example 2 and Comparative Examples 1, 3 and 4 exhibited higher capacity retentions than Comparative Example 6.

Figure 2 further compares the rate performances of the cells of Comparative Example 1 (containing KG), Example 2 (containing OS) with Comparative Example 6 (containing CMC) and Comparative Example 7 (containing SA).

Specifically, the rate performance of each cell was evaluated on a LAND battery test system (Wuhan Kingnuo Electronics Co., Ltd., China) at 25 °C . Each cell was discharged/charged within the voltage range of from 0.01 to 1.2V (vs Li/Li$^+$) at varying current densities, i.e., at 0.1 A g$^{-1}$ for the 1st to 4th cycles, at 0.5 A g$^{-1}$ for the 5th to 8th cycles, at 1.0 A g$^{-1}$ for the 9th to 12th cycles, at 2.0 A g$^{-1}$ for the 13th to 16th cycles, at 4.0 A g$^{-1}$ for the 17th to 20th cycles, and 0.1 A g$^{-1}$ for the 21st to 24th cycles. The mass loading of the nano silicon particles in each anode of the cells is about 0.3 to 0.5 mg/cm$^2$ (about 0.4 mg/cm$^2$).

It can be clearly seen that the rate performances of the cells in Comparative Example 1 and Example 2 were significantly better than those in Comparative Examples 6 and 7. The rate performance differences between the cell in the Example and those in the Comparative Examples were more significant at relatively higher current densities. For example, at a current density of 4.0 A g$^{-1}$, the capacity of Oxystarch in Example 2 was as high as 2500 mAh g$^{-1}$, while

the capacity of CMC in Comparative Example 6 was lower than 500 mAh g$^{-1}$.

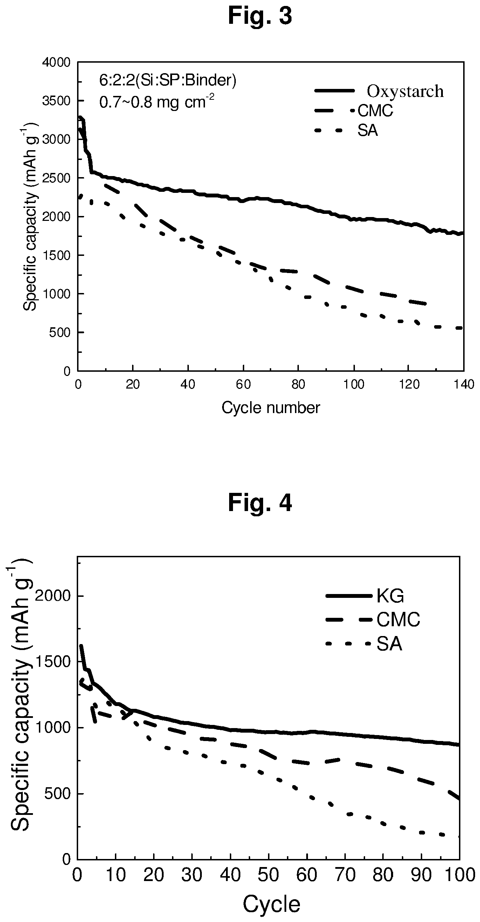

Figure 3 compares the cycling performances of the cells of Example 2 (containing OS) with Comparative Example 6 (containing CMC) and Comparative Example 7 (containing SA).

The cycling performance of each cell was evaluated on a LAND battery test system (Wuhan Kingnuo Electronics Co., Ltd., China) at 25 °C . Each cell was discharged/charged within a voltage range of from 0.01 to 1.2V (vs Li/Li$^+$) and at 0.1 A g$^{-1}$ for the 1st and 2nd cycles, at 0.3 A g$^{-1}$ for the 3rd and 4th cycles, and at a constant current density of 0.5 A g$^{-1}$ (lithiation) and 2 A g$^{-1}$ (delithiation) for the following cycles.

The mass loading of nano silicon particles was 0.7 to 0.8 mg/cm$^2$ for the Example and Comparative Examples in Figure 3, which was higher than the mass loading of 0.3 to 0.5 mg/cm$^2$ in Figures 1 and 2. When the mass loading of active material was increased, the electrode became easier to crack. However, the cell of Example 2 (OS) exhibited relatively high capacities and excellent cycling stability. In contrast, the cycling performances of the cells in Comparative Example 6 and Comparative Example 7 (CMC and SA) were inferior.

Figure 4 compares the cycling performances of the cells of Comparative Example 5 (containing KG), with Comparative Example 8 (containing CMC) and Comparative Example 9 (containing SA).

The cycling performance of each cell was evaluated on a LAND battery test system (Wuhan Kingnuo Electronics Co., Ltd., China) at 25 °C . Each cell was discharged/charged within a voltage range of from 0.01 to 1.2V (vs Li/Li$^+$) and at 0.1 A g$^{-1}$ for the 1st to 3rd cycles, and at a constant current density of 0.5 A g$^{-1}$ (lithiation) and 1.0A g$^{-1}$ (delithiation) for the following cycles. The mass loading of the coating layer in each anode of the cells is about 2.0 to 2.3 mg/cm$^2$.

The cells in Comparative Example 5, Comparative Example 8 and Comparative Example 9 employed a mixture of SP, graphite powder and graphite flake (KS6L) as the carbon material. By referring to Figure 4, it can be seen that Comparative Example 5, which employed dendritic polysaccharides (i.e., KG) and formed three-dimensional networks, showed better cycling performance than Comparative Examples 8 and 9 (CMC and SA), which employed linear polysaccharides and formed linear networks. In addition, the improved cycling performance of Comparative Example 5 may also be attributed to good dispersion of conductive carbon materials in dendritic polysaccharides (i.e., KG), which leads to good conductive networks within the electrode. In contrast, the cycling performance of the cell in Comparative Example 9 (SA) was the worst, partially due to the poor dispersibility of carbon material in SA. The following test further compared the dispersibilities of carbon material in different binders.

**[Dispersibilities of carbon materials in different binders]**

As mentioned above, the coated Cu foils in Comparative Example 10 (containing KG and Super P), Comparative Example 11 (containing CMC and Super P) and Comparative Example 12 (containing SA and Super P) were observed with naked eyes.

It was found that the coated Cu foil in Comparative Example 10 was in uniform dark color, indicating that Super P was uniformly dispersed in the anode composition. In contrast, the coated Cu foil in Comparative Example 12 was in light color and not uniform, indicating that Super P was not uniformly dispersed in the anode composition. It can be seen that SA does not permit carbon material to uniformly disperse therein. In contrast, the specific dendritic polysaccharides of the present disclosure may uniformly disperse both silicon-based active materials and carbon materials therein. Therefore, the specific dendritic polysaccharides of the present disclosure may be particularly suitable for anodes containing both silicon-based active materials and carbon materials, or particularly suitable for anodes containing silicon/carbon composites and/or silicon oxide/carbon composites in the silicon-based active materials.

**[Adhesive forces of different binders - peeling tests]**

FMT-310 force tester (available from ALLURIS Company) was used to measure the adhesive forces of the anodes prepared in Comparative Example 1 and Example 2, as well as Comparative Examples 6 and 7. A transparent sticky tape with a width of 2cm was attached to each of these four anodes. The attached anode was then clamped onto the upper edge and the lower edge of the force tester. Subsequently, the attached surface of the anode was pulled in a direction vertical to the anode surface at a constant speed of 100 mm/minute, with the pulling force being slowly increased. Once the tape was pulled away from the Cu foil, the maximum pulling force during the pulling process was recorded as the adhesive force (unit: N) in the following Table 2.

Table 2

| | Comparative Example 1-KG | Example 2-OS | Comparative Example 6-CMC | Comparative Example 7-SA |
|---|---|---|---|---|
| Adhesive Force (N) | 4.361 | 3.022 | 2.879 | 1.288 |

It can be seen that the dendritic polysaccharides in Comparative Example 1 and Example 2 (KG and OS) showed significantly improved adhesive forces than linear polysaccharides in Comparative Examples 6 and 7 (CMC and SA).

**[Integrity Retention of different binders]**

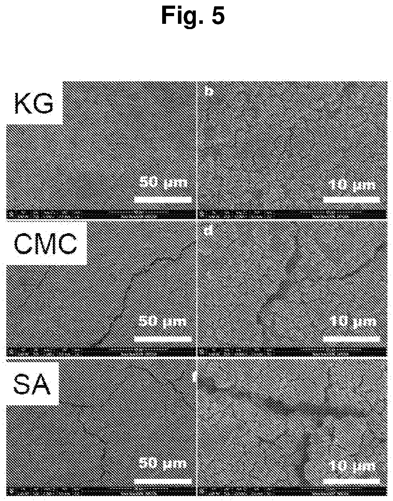

Figure 5 shows TEM images of the anodes prepared according to Comparative Example 1 (containing KG), Comparative Example 6 (containing CMC) and Comparative Example 7 (containing SA), wherein these anodes have undergone 100 cycles under high loading as indicated in Figure 4.

By referring Figure 5, it can be seen that after being charged/discharged at high loading, the anode of Comparative Example 1 retained good morphological integrity, while the anodes of Comparative Examples 6 and 7 had significant cracks on the anode surfaces.

EXAMPLES P1 for Prelithiation

Active material of the cathode: NCM-111 from BASF, and HE-NCM prepared according to the method as described in WO 2013/097186 A1;

Active material of the anode: a mixture (1:1 by weight) of silicon nanoparticle with a diameter of 50 nm from Alfa Aesar and graphite from Shenzhen Kejingstar Technology Ltd.;

Carbon additives: flake graphite KS6L and Super P Carbon Black C65 from Timcal; Binder: PAA, Mv= 450,000, from Sigma Aldrich;

Electrolyte: 1M $LiPF_6$/EC(ethylene carbonate)+DMC(dimethyl carbonate) (1:1 by volume);

Separator: PP/PE/PP membrane Celgard 2325.

Example P1-E1:

At first anode/Li half cells were assembled in form of 2016 coin cell in an Argon-filled glove box (MB-10 compact, MBraun), wherein lithium metal was used as the counter electrode. The assembled anode/Li half cells were discharged to the designed prelithiation degree $\varepsilon$ as given in Table P1-E1, so as to put a certain amout of $Li^+$ ions in the anode, i.e., the prelithiation of the anode. Then the half cells were disassembled. The prelithiated anode and NCM-111 cathode were assembled to obtain 2032 coin full cells. The cycling performances of the full cells were evaluated at 25°C on an Arbin battery test system at 0.1C for formation and at 1C for cycling.

Table P1-E1

| Group | a | $\eta_1$ | b | $\eta_2$ | $\varepsilon$ | c | x | $\eta_F$ | Life |
|---|---|---|---|---|---|---|---|---|---|
| G0 | 2.30 | 90% | 2.49 | 87% | 0 | 1.00 | 1.08 | 83% | 339 |
| G1 | 2.30 | 90% | 2.68 | 87% | 5.6% | 0.99 | 1.10 | 86% | 353 |
| G2 | 2.30 | 90% | 3.14 | 87% | 19.5% | 0.83 | 1.10 | 89% | 616 |
| G3 | 2.30 | 90% | 3.34 | 87% | 24.3% | 0.77 | 1.10 | 88% | 904 |
| G4 | 2.30 | 90% | 3.86 | 87% | 34.6% | 0.66 | 1.10 | 89% | 1500 |

a initial delithiation capacity of the cathode [$mAh/cm^2$];
$\eta_1$ initial Coulombic effidency of the cathode;
b initial lithiation capacity of the anode [$mAh/cm^2$];
$\eta_2$ initial Coulombic effiency of the anode;
$\varepsilon$ prelithiation degree of the anode;
c depth of discharge of the anode;
$x = b \cdot (1 - \varepsilon) / a$, balance of the anode and cathode capacities after prelithiation;
$\eta_F$ initial Coulombic efficiency of the full cell;

Life cycle life of the full cell (80% capacity retention).

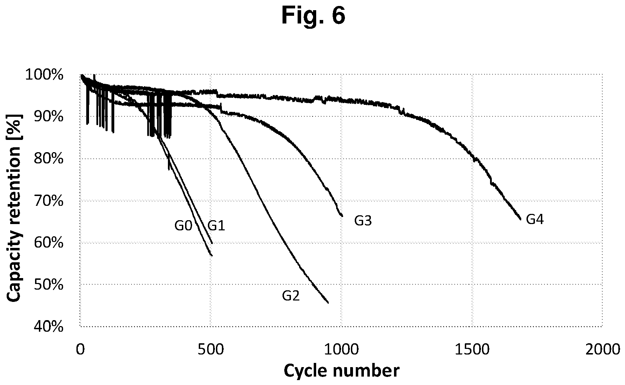

Figure 6 shows the cycling performances of the full cells of Groups G0, G1, G2, G3, and G4 of Example P1-E1.

In case of Group G0 with a prelithiation degree $\varepsilon = 0$, the capacity of the full cell was decreased to 80% after 339 cycles.

In case of Group G1 with a prelithiation degree of 5.6%, the prelithiation amount was only enough to compensate the irreversible Li loss difference between the cathode and the anode. Therefore, the initial Coulombic efficiency was increased from 83% to 86%, while no obvious improvement in cycling performance was observed.

In case of Group G2 with a prelithiation degree increased to 19.5%, the prelithiation amount was not only enough to compensate the irreversible Li loss difference between the cathode and the anode, but also extra amount of Li was reserved in the anode to compensate the Li loss during cycling. Hence, the cycle life was greatly improved to 616 cycles.

In case of Groups G3 and G4 with further increased prelithiation degrees, more and more Li was reserved in the anode, so better and better cycling performances were obtained.

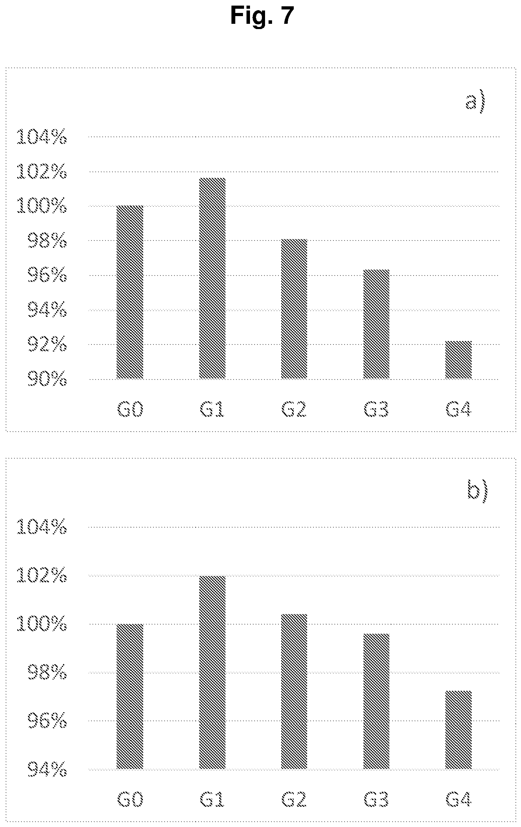

Figure 7 shows a) the volumetric energy densities and b) the gravimetric energy densities of the full cells of Groups G0, G1, G2, G3, and G4 in Example P1-E1. Compared with non-prelithiation (G0), Group G1 with 5.6% prelithiation degree shows a higher energy density due to the higher capacity. In case of the further increased prelithiation degree for a better cycling performance, the energy density decreases to some extend but still has more than 90% energy density of G0 when prelithiation degree reaches 34.6% in G4.

Example P1-E2:

Example P1-E2 was carried out similar to Example P1-E1, except that HE-NCM was used as the cathode active material and the corresponding parameters were given in Table P1-E2.

Table P1-E2

| Group | a | $\eta_1$ | b | $\eta_2$ | $\varepsilon$ | c | x | $\eta_F$ | Life |
|---|---|---|---|---|---|---|---|---|---|
| G0 | 3.04 | 96% | 3.25 | 87% | 0 | 1.00 | 1.07 | 85% | 136 |
| G1 | 3.04 | 96% | 4.09 | 87% | 18.3% | 0.90 | 1.10 | 94% | 231 |
| G2 | 3.04 | 96% | 4.46 | 87% | 26.3% | 0.80 | 1.08 | 95% | 316 |

a initial delithiation capacity of the cathode [mAh/cm$^2$];
$\eta_1$ initial Coulombic efficency of the cathode;
b initial lithiation capacity of the anode [mAh/cm$^2$];
$\eta_2$ initial Coulombic efficency of the anode;
$\varepsilon$ prelithiation degree of the anode;
c depth of discharge of the anode;
x = b $\cdot$ (1 - $\varepsilon$) / a, balance of the anode and cathode capacities after prelithiation;
$\eta_F$ initial Coulombic efficiency of the full cell;

Life cycle life of the full cell (80% capacity retention).

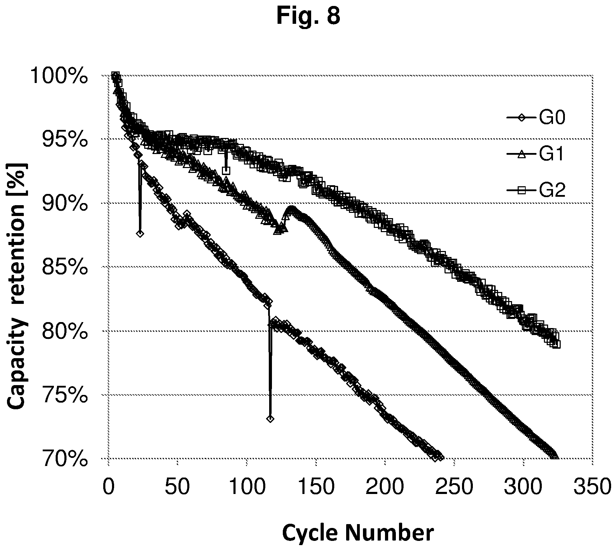

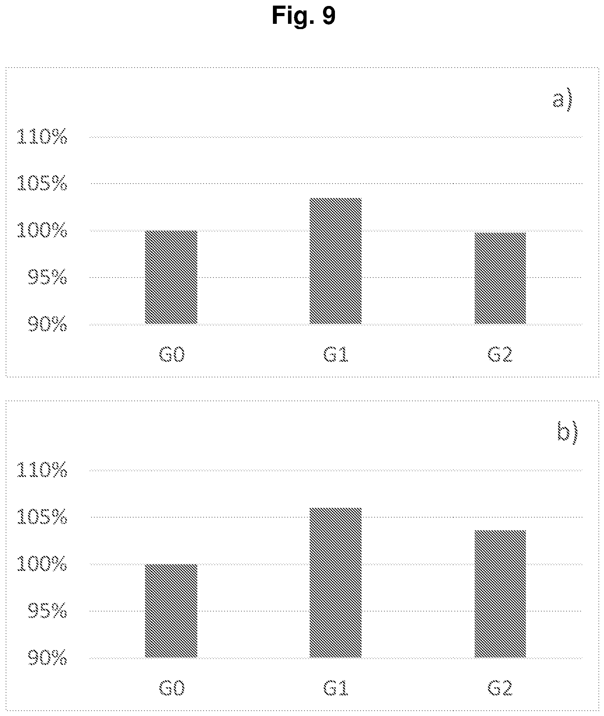

Figure 8 shows the cycling performances of the full cells of Groups G0, G1, and G2 of Example P1-E2. Figure 9 shows a) the volumetric energy densities and b) the gravimetric energy densities of the full cells of Groups G0, G1, and G2 of Example P1-E2. It can been seen from Table P1-E2 that the initial Coulombic efficiencies of the full cells were increased from 85% to 95% in case of the prelithiation. Although larger anodes were used for prelithiation, the energy density did not decrease, or even a higher energy density was reached, compared with non-prelithiation in G0. Moreover, the cycling performances were greatly improved, because the Li loss during cycling was compensated by the reserved Li.

Example P1-E3:

Example P1-E3 was carried out similar to Example P1-E1, except that pouch cells were assembled instead of coin cells, and the corresponding prelithiation degrees $\varepsilon$ of the anode were a) 0 and b) 22%.

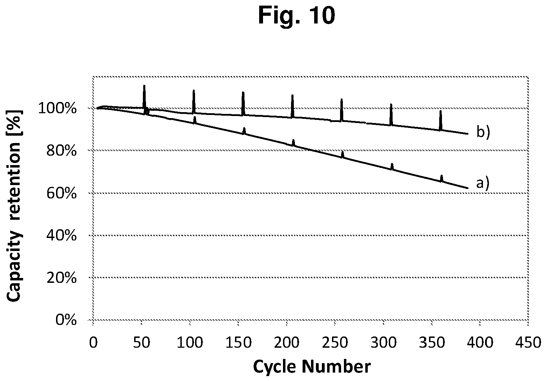

Figure 10 shows the cycling performances of the full cells of Example P1-E3 with the prelithiation degrees $\varepsilon$ of a) 0 and b) 22%. It can been seen that the cycling performance was much improved in case of the prelithiation.

EXAMPLES P2 for Prelithiation

Size of the pouch cell: 46 mm × 68 mm (cathode); 48 mm × 71 mm (anode);
Cathode: 96.5 wt.% of NCM-111 from BASF, 2 wt.% of PVDF Solef 5130 from Sovey, 1 wt.% of Super P Carbon Black C65 from Timcal, 0.5 wt.% of conductive graphite KS6L from Timcal;
Anode: 40 wt.% of Silicon from Alfa Aesar, 40 wt.% of graphite from BTR, 10 wt.% of NaPAA, 8 wt.% of conductive graphite KS6L from Timcal, 2 wt.% of Super P Carbon Black C65 from Timcal;
Electrolyte: 1M LiPF$_6$/EC+DMC (1:1 by volume, ethylene carbonate (EC), dimethyl carbonate (DMC), including 30 vol.% of fluoroethylene carbonate (FEC), based on the total nonaqueous organic solvent);
Separator: PP/PE/PP membrane Celgard 2325.

Comparative Example P2-CE1:

A pouch cell was assembled with a cathode initial capacity of 3.83 mAh/cm$^2$ and an anode initial capacity of 4.36 mAh/cm$^2$ in an Argon-filled glove box (MB-10 compact, MBraun). The cycling performance was evaluated at 25°C on an Arbin battery test system at 0.1C for formation and at 1C for cycling, wherein the cell was charged to the nominal charge cut off voltage 4.2 V, and discharged to the nominal discharge cut off voltage 2.5 V or to a cut off capacity of 3.1 mAh/cm$^2$. The calculated prelithiation degree ε of the anode was 0.

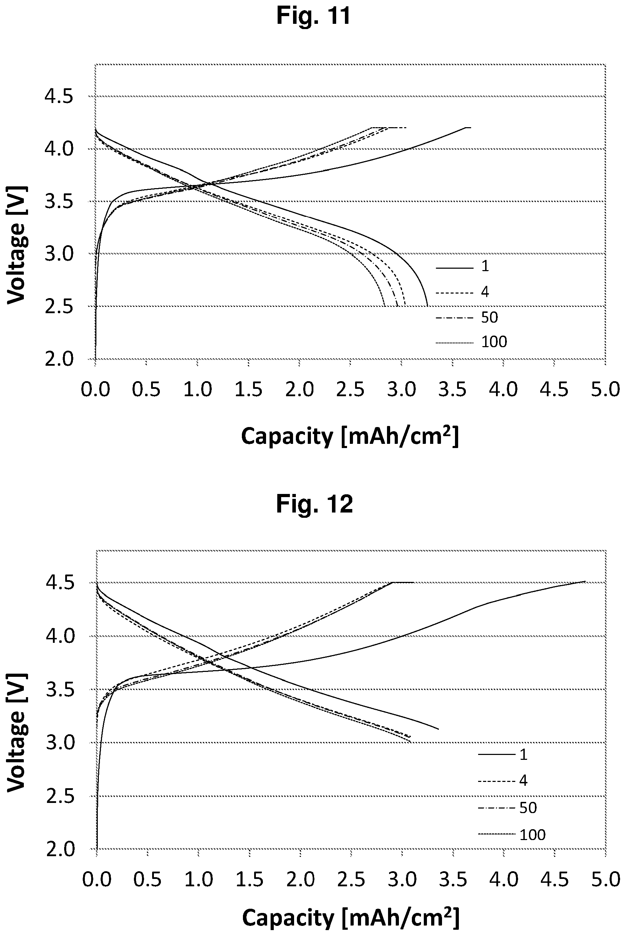

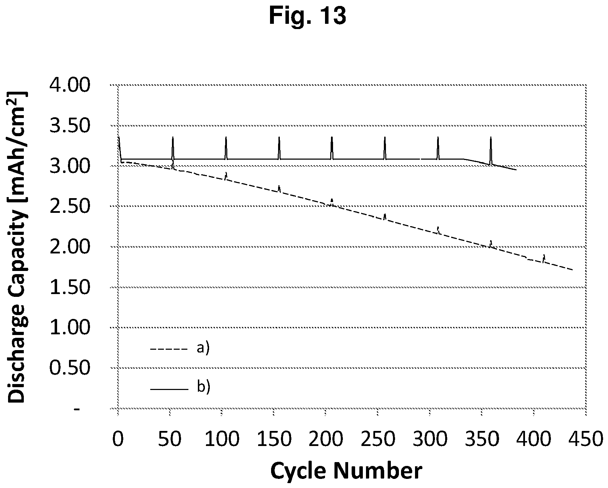

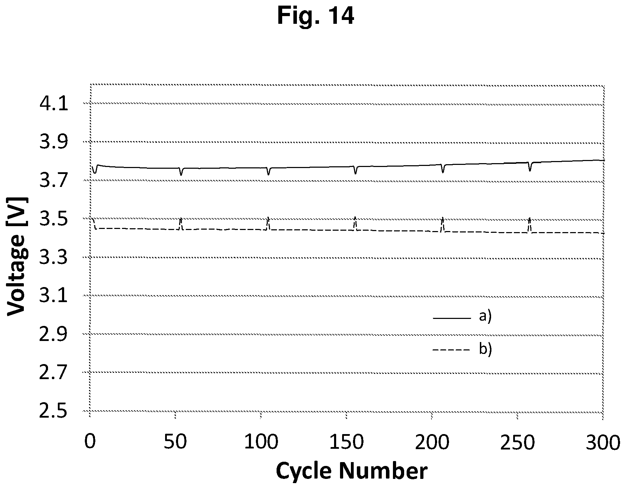

Figure 11 shows the discharge/charge curve of the cell of Comparative Example P2-CE1, wherein "1", "4", "50" and "100" stand for the 1st, 4th, 50th and 100th cycle respectively. Figure 13 shows the cycling performances of the cells of a) Comparative Example P2-CE1 (dashed line). Figure 14 shows the average charge voltage a) and the average discharge voltage b) of the cell of Comparative Example P2-CE1.

Example P2-E1:

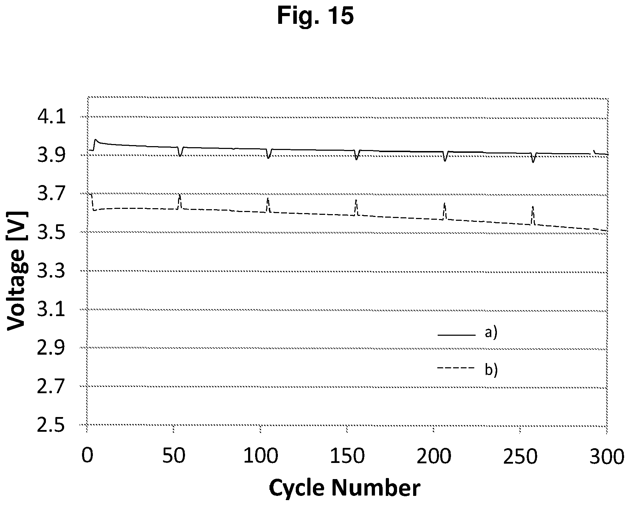

A pouch cell was assembled with a cathode initial capacity of 3.73 mAh/cm$^2$ and an anode initial capacity of 5.17 mAh/cm$^2$ in an Argon-filled glove box (MB-10 compact, MBraun). The cycling performance was evaluated at 25°C on an Arbin battery test system at 0.1C for formation and at 1C for cycling, wherein the cell was charged to a cut off voltage of 4.5 V, which was 0.3 V greater than the nominal charge cut off voltage, and discharged to the nominal discharge cut off voltage 2.5 V or to a cut off capacity of 3.1 mAh/cm$^2$. The calculated prelithiation degree ε of the anode was 21%. Figure 12 shows the discharge/charge curve of the cell of Example P2-E1, wherein "1", "4", "50" and "100" stand for the 1st, 4th, 50th and 100th cycle respectively. Figure 13 shows the cycling performances of the cells of b) Example P2-E1 (solid line). Figure 15 shows the average charge voltage a) and the average discharge voltage b) of the cell of Example P2-E1.
While the disclosure has been described with reference to certain examples, those skilled in the art will appreciate that various modifications, changes, omissions, and substitutions can be made without departing from the scope of the disclosure. It is intended, therefore, that the present invention be limited only by the scope of the following claims.

**Claims**

1. An anode composition for lithium ion batteries, comprising:

    a) from 5% to 90% by weight of a silicon-based active material;
    b) from 5% to 35% by weight of a binder, wherein the binder is oxystarch, wherein the oxystarch is a material prepared by partially oxidizing corn starch so that part of the hydroxyl groups in the corn starch are converted into carboxyl groups, wherein the corn starch is a natural mixture of amylose and amylopectin; and
    c) from 0 to 85% by weight of carbon material,

    wherein the weight percents of each component are based on the total weight of the anode composition.

2. The anode composition according to claim 1, wherein the silicon-based active material is selected from the group consisting of silicon, silicon alloys, silicon oxides, silicon/carbon composites, silicon oxide/carbon composites and any combination thereof.

3. The anode composition according to claim 1 or 2, further comprising: c) a carbon material, wherein the carbon material is selected from the group consisting of carbon black, acetylene black, Ketjen black, graphite, graphene, carbon nanotubes, vapour grown carbon fibers and any combination thereof.

4. A process for preparing an anode for lithium ion batteries, comprising:

preparing a slurry by mixing all components of the anode composition according to any one of claims 1 to 3 with a solvent; and
applying the slurry onto a current collector.

**5.** A lithium ion battery, comprising an anode prepared from the anode composition according to any one of claims 1 to 3, or comprising an anode prepared by the process according to claim 4.

**6.** The lithium-ion battery according to claim 5, further comprising a cathode and an electrolyte, wherein the initial surface capacity a of the cathode and the initial surface capacity b of the anode satisfy the relation formulae

$$1 < (b \cdot (1 - \varepsilon) / a) \leq 1.2 \tag{I},$$

$$0 < \varepsilon \leq ((a \cdot \eta_1) / 0.6 - (a - b \cdot (1 - \eta_2))) / b \tag{II},$$

where

$\varepsilon$ is the prelithiation degree of the anode,
$\eta_1$ is the initial coulombic efficiency of the cathode, and
$\eta_2$ is the initial coulombic efficiency of the anode.

**7.** The lithium-ion battery according to claim 5, further comprising a cathode and an electrolyte, wherein the initial surface capacity a of the cathode and the initial surface capacity b of the anode satisfy the relation formulae

$$1.05 \leq (b \cdot (1 - \varepsilon) / a) \leq 1.15 \tag{Ia},$$

$$0 < \varepsilon \leq ((a \cdot \eta_1) / 0.6 - (a - b \cdot (1 - \eta_2))) / b \tag{II},$$

where

$\varepsilon$ is the prelithiation degree of the anode,
$\eta_1$ is the initial coulombic efficiency of the cathode, and
$\eta_2$ is the initial coulombic efficiency of the anode.

**8.** The lithium-ion battery according to claim 5, further comprising a cathode and an electrolyte, wherein the initial surface capacity a of the cathode and the initial surface capacity b of the anode satisfy the relation formulae

$$1.08 \leq (b \cdot (1 - \varepsilon) / a) \leq 1.12 \tag{Ib},$$

$$0 < \varepsilon \leq ((a \cdot \eta_1) / 0.6 - (a - b \cdot (1 - \eta_2))) / b \tag{II},$$

where

$\varepsilon$ is the prelithiation degree of the anode,
$\eta_1$ is the initial coulombic efficiency of the cathode, and
$\eta_2$ is the initial coulombic efficiency of the anode.

**9.** The lithium-ion battery of any one of claims 6 to 8, **characterized in that**

$$\varepsilon = ((a \cdot \eta_1) / c - (a - b \cdot (1 - \eta_2))) / b \tag{III},$$

$$0.6 \leq c < 1 \qquad (\text{IV}),$$

where
c is the depth of discharge of the anode.

**10.** The lithium-ion battery of claim 9, **characterized in that**

$$0.7 \leq c < 1 \qquad (\text{IVa}).$$

**11.** The lithium-ion battery of claim 9, **characterized in that**

$$0.7 \leq c \leq 0.9 \qquad (\text{IVb}).$$

**12.** The lithium-ion battery of claim 9, **characterized in that**

$$0.75 \leq c \leq 0.85 \qquad (\text{IVc}).$$

**13.** A method for producing a lithium-ion battery comprising a cathode, an electrolyte, and an anode, wherein the anode is prepared from the anode composition according to any one of claims 1 to 3, or prepared by the process according to claim 4, and said method includes the following steps:

1) prelithiating the active material of the anode or the anode to a prelithiation degree $\varepsilon$, and
2) assembling the anode and the cathode to obtain said lithium-ion battery, **characterized in that** the initial surface capacity a of the cathode, the initial surface capacity b of the anode, and the prelithiation degree $\varepsilon$ satisfy the relation formulae

$$1 < (b \bullet (1 - \varepsilon) / a) \leq 1.2 \qquad (\text{I}),$$

$$0 < \varepsilon \leq ((a \bullet \eta_1) / 0.6 - (a - b \bullet (1 - \eta_2))) / b \qquad (\text{II}),$$

where

$\varepsilon$ is the prelithiation degree of the anode,
$\eta_1$ is the initial coulombic efficiency of the cathode, and
$\eta_2$ is the initial coulombic efficiency of the anode.

**14.** The method according to claim 13, wherein

$$1.05 \leq (b \bullet (1 - \varepsilon) / a) \leq 1.15 \qquad (\text{Ia}).$$

**15.** The method according claim 13, wherein

$$1.08 \leq (b \bullet (1 - \varepsilon) / a) \leq 1.12 \qquad (\text{Ib}).$$

**16.** The method of any one of claims 13 to 15, **characterized in that**

$$\varepsilon = ((a \bullet \eta_1) / c - (a - b \bullet (1 - \eta_2))) / b \qquad (\text{III}),$$

$$0.6 \leq c < 1 \qquad (IV),$$

where
c is the depth of discharge of the anode.

**17.** The method of claim 16, **characterized in that**

$$0.7 \leq c < 1 \qquad (IVa).$$

**18.** The method of claim 16, **characterized in that**

$$0.7 \leq c \leq 0.9 \qquad (IVb).$$

**19.** The method of claim 16, **characterized in that**

$$0.75 \leq c \leq 0.85 \qquad (IVc).$$

**20.** A method for producing a lithium-ion battery comprising a cathode, an electrolyte, and an anode, wherein the anode is prepared from the anode composition according to any one of claims 1 to 3, or prepared by the process according to claim 4, and said method includes the following steps:

1) assembling the anode and the cathode to obtain said lithium-ion battery, and
2) subjecting said lithium-ion battery to a formation process, wherein said formation process includes an initial formation cycle comprising the following steps:

a) charging the battery to a cut off voltage $V_{off}$ which is greater than 4.05 V as the nominal charge cut off voltage of the battery, and
b) discharging the battery to 2.5 V $\pm$ 50 mV as the nominal discharge cut off voltage of the battery.

**21.** The method of claim 20, wherein the cut off voltage $V_{off}$ is up to 0.8 V greater than 4.25 V as the nominal charge cut off voltage of the battery.

**22.** The method of claim 20, wherein the cut off voltage $V_{off}$ is 0.1 ~ 0.5 V greater than 4.05 ~ 4.25 V as the nominal charge cut off voltage of the battery.

**23.** The method of claim 20, wherein the cut off voltage $V_{off}$ is 0.2 ~ 0.4 V greater than 4.05 ~ 4.25 V as the nominal charge cut off voltage of the battery.

**24.** The method of claim 20, wherein the cut off voltage $V_{off}$ is about 0.3 V greater than 4.05 ~ 4.25 V as the nominal charge cut off voltage of the battery.

**25.** The method of any one of claims 20 to 24, **characterized in that** the relative increment r of the initial surface capacity of the cathode over the nominal initial surface capacity a of the cathode and the cut off voltage $V_{off}$ satisfy the following linear equation with a tolerance of $\pm 10\%$

$$r = 0.75 V_{off} - 3.134 \qquad (V).$$

**26.** The method of any one of claims 20 to 24, **characterized in that** the relative increment r of the initial surface capacity of the cathode over the nominal initial surface capacity a of the cathode and the cut off voltage $V_{off}$ satisfy the following quadratic equation with a tolerance of $\pm 10\%$

$$r = -0.7857 V_{off}^2 + 7.6643 V_{off} - 18.33 \qquad (Va).$$

27. The method of any one of claims 20 to 26, **characterized in that** the nominal initial surface capacity a of the cathode and the initial surface capacity b of the anode satisfy the relation formulae

$$1 < b \bullet \eta_2 / (a \bullet (1 + r) - b \bullet (1 - \eta_2)) - \varepsilon \leq 1.2 \qquad (I'),$$

$$0 < \varepsilon \leq ((a \bullet \eta_1) / 0.6 - (a - b \bullet (1 - \eta_2))) / b \qquad (II),$$

where

$\varepsilon$ is the prelithiation degree of the anode, and
$\eta_2$ is the initial coulombic efficiency of the anode.

28. The method of claim 27, **characterized in that**

$$1.05 \leq b \bullet \eta_2 / (a \bullet (1 + r) - b \bullet (1 - \eta_2)) - \varepsilon \leq 1.15 \qquad (Ia').$$

29. The method of claim 27, **characterized in that**

$$1.08 \leq b \bullet \eta_2 / (a \bullet (1 + r) - b \bullet (1 - \eta_2)) - \varepsilon \leq 1.12 \qquad (Ib'),$$

30. The method of any one of claims 20 to 29, **characterized in that**

$$\varepsilon = ((a \bullet \eta_1) / c - (a - b \bullet (1 - \eta_2))) / b \qquad (III),$$

$$0.6 \leq c < 1 \qquad (IV),$$

where

$\eta_1$ is the initial coulombic efficiency of the cathode, and
c is the depth of discharge of the anode.

31. The method of claim 30, **characterized in that**

$$0.7 \leq c < 1 \qquad (IVa).$$

32. The method of claim 30, **characterized in that**

$$0.7 \leq c \leq 0.9 \qquad (IVb).$$

33. The method of claim 30, **characterized in that**

$$0.75 \leq c \leq 0.85 \qquad (IVc).$$

34. The method of any one of claims 20 to 33, **characterized in that** the electrolyte comprises one or more fluorinated carbonate compounds as a nonaqueous organic solvent.

35. The method of claim 34, **characterized in that** the electrolyte comprises one or more fluorinated cyclic or acyclic carbonate compounds, as a nonaqueous organic solvent.

**Patentansprüche**

1. Anodenzusammensetzung für Lithium-Ionen-Batterien, Folgendes umfassend:

   a) von 5 % bis 90 Masse-% eines Silizium-basierten aktiven Materials;
   b) von 5 % bis 35 Masse-% eines Bindemittels, wobei das Bindemittel Oxystärke ist, wobei die Oxystärke ein Material ist, das durch teilweises Oxidieren von Maisstärke hergestellt wird, so dass ein Teil der Hydroxyl-Gruppen in der Maisstärke in Carboxyl-Gruppen umgewandelt ist, wobei die Maisstärke eine natürliche Mischung aus Amylose und Amylopektin ist; und
   c) von 0 bis 85 Masse-% Kohlenstoff-Material,

   wobei die Masseprozentwerte jeder Komponente auf der Gesamtmasse der Anodenzusammensetzung basieren.

2. Anodenzusammensetzung nach Anspruch 1, wobei das Silizium-basierte aktive Material aus der Gruppe ausgewählt ist, bestehend aus Silizium, Silizium-Legierungen, Siliziumoxiden, Silizium/Kohlenstoff-Verbundstoffen, Siliziumoxid/Kohlenstoff-Verbundstoffen und jeder Kombination davon.

3. Anodenzusammensetzung nach Anspruch 1 oder 2, weiterhin Folgendes umfassend: c) ein Kohlenstoff-Material, wobei das Kohlenstoff-Material aus der Gruppe ausgewählt ist, bestehend aus Ruß, Acetylenschwarz, Ketjen-Schwarz, Graphit, Graphen, Kohlenstoff-Nanoröhrchen, aus Dampf gewachsenen Kohlefasern und jeder Kombination davon.

4. Prozess zum Herstellen einer Anode für Lithium-Ionen-Batterien, Folgendes umfassend:

   Herstellen einer Aufschlämmung durch Mischen aller Komponenten der Anodenzusammensetzung nach einem der Ansprüche 1 bis 3 mit einem Lösemittel; und
   Aufbringen der Aufschlämmung auf einem Stromabnehmer.

5. Lithium-Ionen-Batterie, eine Anode umfassend, die aus der Anodenzusammensetzung nach einem der Ansprüche 1 bis 3 hergestellt wurde, oder eine Anode umfassend, die durch den Prozess nach Anspruch 4 hergestellt wurde.

6. Lithium-Ionen-Batterie nach Anspruch 5, weiterhin eine Kathode und einen Elektrolyt umfassend, wobei die anfängliche Oberflächenkapazität a der Kathode und die anfängliche Oberflächenkapazität b der Anode die folgenden Beziehungsformeln erfüllen

$$1 < (b \bullet (1 - \varepsilon) \,/\, a) \leq 1{,}2 \qquad (\text{I}),$$

$$0 < \varepsilon \leq ((a \bullet \eta_1) \,/\, 0{,}6 - (a - b \bullet (1 - \eta_2))) \,/\, b \qquad (\text{II}),$$

wobei

   $\varepsilon$ der Vorlithiierungsgrad der Anode ist,
   $\eta_1$ die anfängliche Coulomb-Effizienz der Kathode ist, und
   $\eta_2$ die anfängliche Coulomb-Effizienz der Anode ist.

7. Lithium-Ionen-Batterie nach Anspruch 5, weiterhin eine Kathode und einen Elektrolyt umfassend, wobei die anfängliche Oberflächenkapazität a der Kathode und die anfängliche Oberflächenkapazität b der Anode die folgenden Beziehungsformeln erfüllen

$$1{,}05 \leq (b \bullet (1 - \varepsilon) \,/\, a) \leq 1{,}15 \qquad (\text{Ia}),$$

$$0 < \varepsilon \leq ((a \bullet \eta_1) \,/\, 0{,}6 - (a - b \bullet (1 - \eta_2))) \,/\, b \qquad (\text{II}),$$

wobei

$\varepsilon$ der Vorlithiierungsgrad der Anode ist,
$\eta_1$ die anfängliche Coulomb-Effizienz der Kathode ist, und
$\eta_2$ die anfängliche Coulomb-Effizienz der Anode ist.

8. Lithium-Ionen-Batterie nach Anspruch 5, weiterhin eine Kathode und einen Elektrolyt umfassend, wobei die anfängliche Oberflächenkapazität a der Kathode und die anfängliche Oberflächenkapazität b der Anode die folgenden Beziehungsformeln erfüllen

$$1,08 \leq (b \bullet (1 - \varepsilon) / a) \leq 1,12 \qquad \text{(Ib)},$$

$$0 < \varepsilon \leq ((a \bullet \eta_1) / 0,6 - (a - b \bullet (1 - \eta_2))) / b \qquad \text{(II)},$$

wobei

$\varepsilon$ der Vorlithiierungsgrad der Anode ist,
$\eta_1$ die anfängliche Coulomb-Effizienz der Kathode ist, und
$\eta_2$ die anfängliche Coulomb-Effizienz der Anode ist.

9. Lithium-Ionen-Batterie nach einem der Ansprüche 6 bis 8, **dadurch gekennzeichnet, dass**

$$\varepsilon = ((a \bullet \eta_1) / c - (a - b \bullet (1 - \eta_2))) / b \qquad \text{(III)},$$

$$0,6 \leq c < 1 \qquad \text{(IV)},$$

wobei c die Entladungstiefe der Anode ist.

10. Lithium-Ionen-Batterie nach Anspruch 9, **dadurch gekennzeichnet, dass**

$$0,7 \leq c < 1 \qquad \text{(IVa)}.$$

11. Lithium-Ionen-Batterie nach Anspruch 9, **dadurch gekennzeichnet, dass**

$$0,7 \leq c \leq 0,9 \qquad \text{(IVb)}.$$

12. Lithium-Ionen-Batterie nach Anspruch 9, **dadurch gekennzeichnet, dass**

$$0,75 \leq c \leq 0,85 \qquad \text{(IVc)}.$$

13. Verfahren zum Produzieren einer Lithium-Ionen-Batterie, eine Kathode, einen Elektrolyt und eine Anode umfassend, wobei die Anode aus der Anodenzusammensetzung nach einem der Ansprüche 1 bis 3 hergestellt wird oder durch den Prozess nach Anspruch 4 hergestellt wird und das Verfahren die folgenden Schritte umfasst:

1) Vorlithiieren des aktiven Materials der Anode oder der Anode auf einen Vorlithiierungsgrad $\varepsilon$, und
2) Zusammenbauen der Anode und der Kathode, um die Lithium-Ionen-Batterie zu erlangen, **dadurch gekennzeichnet, dass** die anfängliche Oberflächenkapazität a der Kathode, die anfängliche Oberflächenkapazität b der Anode und der Vorlithiierungsgrad $\varepsilon$ die folgenden Beziehungsformeln erfüllen

$$1 < (b \bullet (1 - \varepsilon) / a) \leq 1,2 \qquad \text{(I)},$$

$$0 < \varepsilon \leq ((a \bullet \eta_1) / 0,6 - (a - b \bullet (1 - \eta_2))) / b \qquad \text{(II)},$$

wobei

$\varepsilon$ der Vorlithiierungsgrad der Anode ist,
$\eta_1$ die anfängliche Coulomb-Effizienz der Kathode ist, und
$\eta_2$ die anfängliche Coulomb-Effizienz der Anode ist.

**14.** Verfahren nach Anspruch 13, wobei

$$1,05 \leq (b \bullet (1 - \varepsilon) / a) \leq 1,15 \qquad \text{(Ia)}.$$

**15.** Verfahren nach Anspruch 13, wobei:

$$1,08 \leq (b \bullet (1 - \varepsilon) / a) \leq 1,12 \qquad \text{(Ib)}.$$

**16.** Verfahren nach einem der Ansprüche 13 bis 15, **dadurch gekennzeichnet, dass**

$$\varepsilon = ((a \bullet \eta_1) / c - (a - b \bullet (1 - \eta_2))) / b \qquad \text{(III)},$$

$$0,6 \leq c < 1 \qquad \text{(IV)},$$

wobei
c die Entladungstiefe der Anode ist.

**17.** Verfahren nach Anspruch 16, **dadurch gekennzeichnet, dass**

$$0,7 \leq c < 1 \qquad \text{(IVa)}.$$

**18.** Verfahren nach Anspruch 16, **dadurch gekennzeichnet, dass**

$$0,7 \leq c \leq 0,9 \qquad \text{(IVb)}.$$

**19.** Verfahren nach Anspruch 16, **dadurch gekennzeichnet, dass**

$$0,75 \leq c \leq 0,85 \qquad \text{(IVc)}.$$

**20.** Verfahren zum Produzieren einer Lithium-Ionen-Batterie, eine Kathode, einen Elektrolyt und eine Anode umfassend, wobei die Anode aus der Anodenzusammensetzung nach einem der Ansprüche 1 bis 3 hergestellt wird oder durch den Prozess nach Anspruch 4 hergestellt wird und das Verfahren die folgenden Schritte umfasst:

1) Zusammenbauen der Anode und der Kathode, um die Lithium-Ionen-Batterie zu erlangen, und
2) Unterziehen der Lithium-Ionen-Batterie einem Bildungsprozess, wobei der Bildungsprozess einen anfänglichen Bildungszyklus umfasst, die folgenden Schritte umfassend:

a) Laden der Batterie auf eine Schlussspannung $V_{off}$, die größer ist als 4,05 V, als die nominelle Ladeschlussspannung der Batterie, und
b) Entladen der Batterie auf 2,5 V $\pm$50 mV als die nominelle Entladeschlussspannung der Batterie.

**21.** Verfahren nach Anspruch 20, wobei die Schlussspannung $V_{off}$ bis zu 0,8 V größer ist als 4,25 V als die nominelle Ladeschlussspannung der Batterie.

22. Verfahren nach Anspruch 20, wobei die Schlussspannung $V_{off}$ 0,1 ~ 0,5 V größer ist als 4,05 ~ 4,25 V als die nominelle Ladeschlussspannung der Batterie.

23. Verfahren nach Anspruch 20, wobei die Schlussspannung $V_{off}$ 0,2 ~ 0,4 V größer ist als 4,05 ~ 4,25 V als die nominelle Ladeschlussspannung der Batterie.

24. Verfahren nach Anspruch 20, wobei die Schlussspannung $V_{off}$ ungefähr 0,3 V größer ist als 4,05 ~ 4,25 V als die nominelle Ladeschlussspannung der Batterie.

25. Verfahren nach einem der Ansprüche 20 bis 24, **dadurch gekennzeichnet, dass** das relative Inkrement r der anfänglichen Oberflächenkapazität der Kathode über der nominellen anfänglichen Oberflächenkapazität a der Kathode und die Schlussspannung $V_{off}$ die folgende lineare Gleichung mit einer Toleranz von $\pm 10\%$ erfüllen

$$r \; = \; 0,75 V_{off} - 3,134 \qquad \text{(V)} \; .$$

26. Verfahren nach einem der Ansprüche 20 bis 24, **dadurch gekennzeichnet, dass** das relative Inkrement r der anfänglichen Oberflächenkapazität der Kathode über der nominellen anfänglichen Oberflächenkapazität a der Kathode und die Schlussspannung $V_{off}$ die folgende quadratische Gleichung mit einer Toleranz von $\pm 10\%$ erfüllen

$$r \; = \; -0,7857 V_{off}{}^2 + 7,6643 V_{off} - 18,33 \qquad \text{(Va)} \; .$$

27. Verfahren nach einem der Ansprüche 20 bis 26, **dadurch gekennzeichnet, dass** die nominelle anfängliche Oberflächenkapazität a der Kathode und die anfängliche Oberflächenkapazität b der Anode die folgenden Beziehungsformeln erfüllen

$$1 < b \bullet \eta_2 \, / \, (a \bullet (1 + r) - b \bullet (1 - \eta_2)) - \varepsilon \leq 1,2 \qquad \text{(I')},$$

$$0 < \varepsilon \leq ((a \bullet \eta_1) \, / \, 0,6 - (a - b \bullet (1 - \eta_2))) \, / \, b \qquad \text{(II)},$$

wobei
$\varepsilon$ der Vorlithiierungsgrad der Anode ist und $\eta_2$ die anfängliche Coulomb-Effizienz der Anode ist.

28. Verfahren nach Anspruch 27, **dadurch gekennzeichnet, dass**

$$1,05 \leq b \bullet \eta_2 \, / \, (a \bullet (1 + r) - b \bullet (1 - \eta_2)) - \varepsilon \leq 1,15 \qquad \text{(Ia')}.$$

29. Verfahren nach Anspruch 27, **dadurch gekennzeichnet, dass**

$$1,08 \leq b \bullet \eta_2 \, / \, (a \bullet (1 + r) - b \bullet (1 - \eta_2)) - \varepsilon \leq 1,12 \qquad \text{(Ib')}.$$

30. Verfahren nach einem der Ansprüche 20 bis 29, **dadurch gekennzeichnet, dass**

$$\varepsilon = ((a \bullet \eta_1) \, / \, c - (a - b \bullet (1 - \eta_2))) \, / \, b \qquad \text{(III)},$$

$$0,6 \leq c < 1 \qquad \text{(IV)},$$

wobei
$\eta_1$ die anfängliche Coulomb-Effizienz der Kathode ist und c die Entladungstiefe der Anode ist.

**31.** Verfahren nach Anspruch 30, **dadurch gekennzeichnet, dass**

$$0{,}7 \leq c < 1 \qquad \text{(IVa)}.$$

**32.** Verfahren nach Anspruch 30, **dadurch gekennzeichnet, dass**

$$0{,}7 \leq c \leq 0{,}9 \qquad \text{(IVb)}.$$

**33.** Verfahren nach Anspruch 30, **dadurch gekennzeichnet, dass**

$$0{,}75 \leq c \leq 0{,}85 \qquad \text{(IVc)}.$$

**34.** Verfahren nach einem der Ansprüche 20 bis 33, **dadurch gekennzeichnet, dass** der Elektrolyt mindestens eine fluorierte Carbonat-Verbindung als ein nicht wässriges organisches Lösemittel enthält.

**35.** Verfahren nach Anspruch 34, **dadurch gekennzeichnet, dass** der Elektrolyt mindestens eine fluorierte cyclische oder acyclische Carbonat-Verbindung als ein nicht wässriges organisches Lösemittel enthält.

**Revendications**

**1.** Composition d'anode pour des batteries au lithium-ion, comprenant :

a) de 5 % à 90 % en poids d'une matière active à base de silicium ;
b) de 5 % à 35 % en poids d'un liant, le liant étant de l'amidon oxydé, l'amidon oxydé étant une matière préparée par oxydation partielle d'amidon de maïs de sorte qu'une partie des groupes hydroxyle présents dans l'amidon de maïs sont convertis en groupes carboxyle, l'amidon de maïs étant un mélange naturel d'amylose et d'amylopectine ; et
c) de 0 à 85 % en poids de matière carbonée,

dans laquelle les pourcentages en poids de chaque composant sont rapportés au poids total de la composition d'anode.

**2.** Composition d'anode selon la revendication 1, dans laquelle la matière active à base de silicium est choisie dans le groupe constitué par le silicium, les alliages de silicium, les oxydes de silicium, les composites de silicium/carbone, les composites d'oxyde de silicium/carbone et une quelconque combinaison de ceux-ci .

**3.** Composition d'anode selon la revendication 1 ou 2, comprenant en outre : c) une matière carbonée, dans laquelle la matière carbonée est choisie dans le groupe constitué par le noir de carbone, le noir d'acétylène, le Ketjenblack, le graphite, le graphène, les nanotubes de carbone, les fibres de carbone amenées à croître en phase vapeur et une quelconque combinaison de ceux-ci.

**4.** Procédé de préparation d'une anode pour des batteries au lithium-ion, comprenant :

la préparation d'une suspension épaisse par mélange de tous les composants de la composition d'anode selon l'une quelconque des revendications 1 à 3 avec un solvant ; et
l'application de la suspension épaisse sur un collecteur de courant.

**5.** Batterie au lithium-ion, comprenant une anode préparée à partir de la composition d'anode selon l'une quelconque des revendications 1 à 3 ou comprenant une anode préparée par le procédé selon la revendication 4.

**6.** Batterie au lithium-ion selon la revendication 5, comprenant en outre une cathode et un électrolyte, dans laquelle la capacité surfacique initiale a de la cathode et la capacité surfacique initiale b de l'anode satisfont aux formules de relation

$$1 < (b \cdot (1 - \varepsilon) / a) \leq 1,2 \qquad (I),$$

$$0 < \varepsilon \leq ((a \cdot \eta_1) / 0,6 - (a - b \cdot (1 - \eta_2))) / b \qquad (II),$$

où

$\varepsilon$ est le degré de pré-lithiation de l'anode,
$\eta_1$ est le rendement coulombique initial de la cathode et
$\eta_2$ est le rendement coulombique initial de l'anode.

7. Batterie au lithium-ion selon la revendication 5, comprenant en outre une cathode et un électrolyte, dans laquelle la capacité surfacique initiale a de la cathode et la capacité surfacique initiale b de l'anode satisfont aux formules de relation

$$1,05 \leq (b \cdot (1 - \varepsilon) / a) \leq 1,15 \qquad (Ia),$$

$$0 < \varepsilon \leq ((a \cdot \eta_1) / 0,6 - (a - b \cdot (1 - \eta_2))) / b \qquad (II),$$

où

$\varepsilon$ est le degré de pré-lithiation de l'anode,
$\eta_1$ est le rendement coulombique initial de la cathode et
$\eta_2$ est le rendement coulombique initial de l'anode.

8. Batterie au lithium-ion selon la revendication 5, comprenant en outre une cathode et un électrolyte, dans laquelle la capacité surfacique initiale a de la cathode et la capacité surfacique initiale b de l'anode satisfont aux formules de relation

$$1,08 \leq (b \cdot (1 - \varepsilon) / a) \leq 1,12 \qquad (Ib),$$

$$0 < \varepsilon \leq ((a \cdot \eta_1) / 0,6 - (a - b \cdot (1 - \eta_2))) / b \qquad (II),$$

ou

$\varepsilon$ est le degré de pré-lithiation de l'anode,
$\eta_1$ est le rendement coulombique initial de la cathode et
$\eta_2$ est le rendement coulombique initial de l'anode.

9. Batterie au lithium-ion selon l'une quelconque des revendications 6 à 8, **caractérisée en ce que**

$$\varepsilon = ((a \cdot \eta_1) / c - (a - b \cdot (1 - \eta_2))) / b \qquad (III),$$

$$0,6 \leq c < 1 \qquad (IV),$$

où c est la profondeur de décharge de l'anode.

10. Batterie au lithium-ion selon la revendication 9, **caractérisée en ce que**

$$0,7 \leq c < 1 \qquad\qquad \text{(IVa).}$$

11. Batterie au lithium-ion selon la revendication 9, **caractérisée en ce que**

$$0,7 \leq c \leq 0,9 \qquad\qquad \text{(IVb).}$$

12. Batterie au lithium-ion selon la revendication 9, **caractérisée en ce que**

$$0,75 \leq c \leq 0,85 \qquad\qquad \text{(IVc).}$$

13. Procédé de production d'une batterie au lithium-ion comprenant une cathode, un électrolyte et une anode, dans lequel l'anode est préparée à partir de la composition d'anode selon l'une quelconque des revendications 1 à 3 ou préparée par le procédé selon la revendication 4, et ledit procédé comportant les étapes suivantes :

1) la pré-lithiation de la matière active de l'anode ou de l'anode à un degré de pré-lithiation $\varepsilon$ et
2) l'assemblage de l'anode et de la cathode pour obtenir ladite batterie au lithium-ion, **caractérisé en ce que** la capacité surfacique initiale a de la cathode, la capacité surfacique initiale b de l'anode et le degré de pré-lithiation $\varepsilon$ satisfont aux formules de relation

$$1 < (b \bullet (1 - \varepsilon) / a) \leq 1,2 \qquad\qquad \text{(I),}$$

$$0 < \varepsilon \leq ((a \bullet \eta_1) / 0,6 - (a - b \bullet (1 - \eta_2))) / b \qquad\qquad \text{(II),}$$

où

$\varepsilon$ est le degré de pré-lithiation de l'anode,
$\eta_1$ est le rendement coulombique initial de la cathode et
$\eta_2$ est le rendement coulombique initial de l'anode.

14. Procédé selon la revendication 13, dans lequel

$$1,05 \leq (b \bullet (1 - \varepsilon) / a) \leq 1,15 \qquad\qquad \text{(Ia).}$$

15. Procédé selon la revendication 13, dans lequel

$$1,08 \leq (b \bullet (1 - \varepsilon) / a) \leq 1,12 \qquad\qquad \text{(Ib).}$$

16. Procédé selon l'une quelconque des revendications 13 à 15, **caractérisé en ce que**

$$\varepsilon = ((a \bullet \eta_1) / c - (a - b \bullet (1 - \eta_2))) / b \qquad\qquad \text{(III),}$$

$$0,6 \leq c < 1 \qquad\qquad \text{(IV),}$$

où
c est la profondeur de décharge de l'anode.

17. Procédé selon la revendication 16, **caractérisé en ce que**

$$0,7 \leq c < 1 \qquad\qquad (IVa).$$

18. Procédé selon la revendication 16, **caractérisé en ce que**

$$0,7 \leq c \leq 0,9 \qquad\qquad (IVb).$$

19. Procédé selon la revendication 16, **caractérisé en ce que**

$$0,75 \leq c \leq 0,85 \qquad\qquad (IVc).$$

20. Procédé de production d'une batterie au lithium-ion comprenant une cathode, un électrolyte et une anode, dans lequel l'anode est préparée à partir de la composition d'anode selon l'une quelconque des revendications 1 à 3 ou préparée par le procédé selon la revendication 4, et ledit procédé comportant les étapes suivantes :

   1) l'assemblage de l'anode et de la cathode pour obtenir ladite batterie au lithium-ion et
   2) le fait de soumettre ladite batterie au lithium-ion à un processus de formation, dans lequel ledit processus de formation comporte un cycle de formation initial comprenant les étapes suivantes :

   a) la charge de la batterie à une tension de coupure $V_{off}$ qui est supérieure à 4,05 V en tant que tension de coupure de charge nominale de la batterie et
   b) la décharge de la batterie à 2,5 V $\pm$ 50 mV en tant que tension de coupure de décharge nominale de la batterie.

21. Procédé selon la revendication 20, dans lequel la tension de coupure $V_{off}$ va jusqu'à 0,8 V de plus que 4,25 V en tant que tension de coupure de charge nominale de la batterie.

22. Procédé selon la revendication 20, dans lequel la tension de coupure $V_{off}$ est de 0,1~0,5 V de plus que 4,05~4,25 V en tant que tension de coupure de charge nominale de la batterie.

23. Procédé selon la revendication 20, dans lequel la tension de coupure $V_{off}$ est de 0,2~0,4 V de plus que 4,05~4,25 V en tant que tension de coupure de charge nominale de la batterie.

24. Procédé selon la revendication 20, dans lequel la tension de coupure $V_{off}$ est d'environ 0,3 V de plus que 4,05~4,25 V en tant que tension de coupure de charge nominale de la batterie.

25. Procédé selon l'une quelconque des revendications 20 à 24, **caractérisé en ce que** l'incrément relatif r de la capacité surfacique initiale de la cathode par rapport à la capacité surfacique initiale nominale a de la cathode et la tension de coupure $V_{off}$ satisfont à l'équation linéaire suivante avec une tolérance de $\pm$ 10 %

$$r = 0,75 V_{off} - 3,134 \qquad (V).$$

26. Procédé selon l'une quelconque des revendications 20 à 24, **caractérisé en ce que** l'incrément relatif r de la capacité surfacique initiale de la cathode par rapport à la capacité surfacique initiale nominale a de la cathode et la tension de coupure $V_{off}$ satisfont à l'équation quadratique suivante avec une tolérance de $\pm$ 10 %

$$r = -0,7857 V_{off}^{2} + 7,6643 V_{off} - 18,33 \qquad (Va).$$

27. Procédé selon l'une quelconque des revendications 20 à 26, **caractérisé en ce que** la capacité surfacique initiale nominale a de la cathode et la capacité surfacique initiale b de l'anode satisfont aux formules de relation

$$1 < b \cdot \eta_2 / (a \cdot (1 + r) - b \cdot (1 - \eta_2)) - \varepsilon \leq 1,2 \qquad\qquad (I'),$$

$$0 < \varepsilon \leq ((a \cdot \eta_1) / 0{,}6 - (a - b \cdot (1 - \eta_2))) / b \qquad \text{(II)},$$

où

$\varepsilon$ est le degré de pré-lithiation de l'anode et $\eta_2$ est le rendement coulombique initial de l'anode.

**28.** Procédé selon la revendication 27, **caractérisé en ce que**

$$1{,}05 \leq b \cdot \eta_2 / (a \cdot (1 + r) - b \cdot (1 - \eta_2)) - \varepsilon \leq 1{,}15 \qquad \text{(Ia')}.$$

**29.** Procédé selon la revendication 27, **caractérisé en ce que**

$$1{,}08 \leq b \cdot \eta_2 / (a \cdot (1 + r) - b \cdot (1 - \eta_2)) - \varepsilon \leq 1{,}12 \qquad \text{(Ib')}.$$

**30.** Procédé selon l'une quelconque des revendications 20 à 29, **caractérisé en ce que**

$$\varepsilon = ((a \cdot \eta_1) / c - (a - b \cdot (1 - \eta_2))) / b \qquad \text{(III)},$$

$$0{,}6 \leq c < 1 \qquad \text{(IV)},$$

où

$\eta_1$ est le rendement coulombique initial de la cathode et c est la profondeur de décharge de l'anode.

**31.** Procédé selon la revendication 30, **caractérisé en ce que**

$$0{,}7 \leq c < 1 \qquad \text{(IVa)}.$$

**32.** Procédé selon la revendication 30, **caractérisé en ce que**

$$0{,}7 \leq c \leq 0{,}9 \qquad \text{(IVb)}.$$

**33.** Procédé selon la revendication 30, **caractérisé en ce que**

$$0{,}75 \leq c \leq 0{,}85 \qquad \text{(IVc)}.$$

**34.** Procédé selon l'une quelconque des revendications 20 à 33, **caractérisé en ce que** l'électrolyte comprend un ou plusieurs composés de type carbonate fluorés en tant que solvant organique non aqueux.

**35.** Procédé selon la revendication 34, **caractérisé en ce que** l'électrolyte comprend un ou plusieurs composés de type carbonate cycliques ou acycliques fluorés, en tant que solvant organique non aqueux.

## Fig. 1

## Fig. 2

## Fig. 3

## Fig. 4

# Fig. 5

# Fig. 6

# Fig. 7

## Fig. 8

# Fig. 9

# Fig. 10

## Fig. 11

## Fig. 12

# Fig. 13

# Fig. 14

## Fig. 15

**EP 3 472 884 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09293537 A
- US 20080166633 A1
- US 20150270540 A1
- WO 2013097186 A1

**Non-patent literature cited in the description**

- **MARTIN K. et al.** *Journal of Materials Chemistry A,* 2015, vol. 3 (22), 12023-12030